# EUROPÄISCHE PATENTSCHRIFT

(11) **EP 1 256 604 B1**
(45) Veröffentlichungstag und Bekanntmachung des Hinweises auf die Patenterteilung: **31.08.2005**
(21) Anmeldenummer: 02009844.8
(22) Anmeldetag: 02.05.2002
(51) Int. Cl.: C09C 3/12, C09C 1/30, C09C 1/36

(54) **Silanmodifizierter biopolymerer, biooligomerer, oxidischer oder silikatischer Füllstoff, Verfahren zu seiner Herstellung und seine Verwendung**
Biopolymers, biooligomers, oxidic or silicate Filler modified by silanes, method for its production and use
Matériau de remplissage à base de biopolymères, biooligomères ou silice modifiés avec des silanes, méthode de préparation et utilisation

(30) Priorität: 08.05.2001 DE 10122269
(43) Veröffentlichungstag der Anmeldung: 13.11.2002
(73) Patentinhaber: Degussa AG, 40474 Düsseldorf (DE)
(72) Erfinder: Korth, Karsten, Dr., 79639 Wyhlen (DE); Luginsland, Hans-Detlef, Dr., 50968 Köln (DE); Hasse, Andre, 52441 Linnich (DE); Kiefer, Ingo, 79650 Schopfheim (DE); Heidlas, Jürgen, Dr., 83308 Trostberg (DE)

(56) Entgegenhaltungen:
- EP-A- 1 043 357
- US-A- 3 997 356
- US-A- 4 099 981

## Beschreibung

Die Erfindung betrifft einen silanmodifizierten biopolymeren, biooligomeren, oxidischen oder silikatischen Füllstoff, ein Verfahren zu seiner Herstellung sowie seine Verwendung.

Es ist bekannt, oxidische oder silikatische Verbindungen mit Organosiliziumverbindungen zu behandeln, um durch diese Behandlung den Verbund zwischen anorganischem Füllstoff und dem verwendeten organischen Polymer in füllstoffverstärkten Elastomeren zu stärken und damit die Eigenschaften der Füllstoffe in den Polymeren zu verbessern.

Aus DE 2141159, DE 2212239 und US 3,978,103 ist bekannt, daß schwefelhaltige Organosiliziumverbindungen, wie Bis-(3-Triethoxysilylpropyl)tetrasulfan oder 3-Mercaptopropyltriethoxysilan als Silanhaftvermittler oder Verstärkungsadditiv in oxidisch gefüllten Kautschukmischungen, unter anderem für Laufflächen und andere Teile von Autoreifen, eingesetzt werden.

Die Verwendung von Mercaptosilanen in Kautschukmischungen für Reifenlaufflächen ist aus FR-A 152.094.859 bekannt.

Um die erheblichen Probleme bei der Verarbeitung, wie zum Beispiel Pre-Scorch, Scorch und Plastizitätsverhalten, von Mercaptosilanen zu umgehen, verwendet man als Kopplungsagenz für Reifenteile meist polysulfidische Organosilane, wie beispielsweise das Bis-(3-triethoxysilylpropyl)tetrasulfan oder das Bis-(3-triethoxysilylpropyl)disulfan (DE 2542534, DE2405758, DE19541404, DE19734295), die einen Kompromiss für kieselsäuregefüllte Vulkanisate in Bezug auf Vulkanisationssicherheit, einfache Herstellung und Verstärkungsleistung darstellen.

Die Einbringung der entsprechenden Additive, speziell der Organosilane und der unmodifizierten Füllstoffe in die unvulkanisierten Polymermischungen kann auf unterschiedlichen Wegen erfolgen.

Das in-situ Verfahren beinhaltet einen gemeinsamen Mischvorgang von Füllstoffen, wie Ruß und Kieselsäure, Organosilanen und Polymer.

Das ex-situ Verfahren beinhaltet eine Modifikation des Füllstoffs mit dem entsprechenden Organosilan oder einer Mischung von verschiedenen Organosilanen bevor der Füllstoff mit dem Polymer vermischt wird.

Es ist bekannt, daß durch Auflösen der Organosiliziumverbindung in einem organischen Lösungsmittel und anschließender Behandlung von Füllstoffen, z.B. Clays, die Füllstoffoberfläche modifiziert werden kann (US PS-3 227 675).

Eine besonders große Rolle spielt heutzutage die Flüssigdosierung (US 3,997,356) oder auch die Dosierung des aktiven Füllstoffs über eine vorgebildete physikalische Mischung aus Organosilan und Füllstoff (DE 3314742, US 4 076 550). Nachteile dieser thermisch nicht vorbehandelten Abmischungen ist die Lagerstabilität und damit die Eigenschaftsstabilität der Produkte.

Die US-PS 4,151,154 beschreibt oxidische silikatische Füllstoffe, deren Oberfläche einer Behandlung mit zwei unterschiedlichen Typen von Organosiliziumverbindungen ausgesetzt wird. Die oxidischen Teilchen werden dabei so behandelt, daß sie eine größere Affinität zu Wasser zeigen und sich auch leichter in wässrigen Systemen verteilen lassen.

Aus der US PS-35,67,680 ist die Modifizierung von in Wasser suspendiertem Kaolin mit verschiedenen Silanen bekannt. Die beschriebenen Organosiliziumverbindungen sind jedoch in den für die Modifizierung nötigen Mengen wasserlöslich, so daß in diesem Fall die Behandlung des Füllstoffes aus einer wässrigen Lösung heraus erfolgen kann.

Die US 4 044 037 beschreibt Arylpolysulfide und mit diesen Verbindungen behandelte mineralische Füllstoffe, die in Kautschukmischungen eingesetzt werden. Die Herstellung erfolgt in einer wässrig/alkoholischen Formulierung, die 99,9 bis 80 Gew.-% Alkohol enthält.

Ferner ist aus EP-PS 01 26 871 ein Verfahren bekannt, bei dem man die Oberfläche silikatischer Füllstoffe mit Hilfe einer wässrigen Emulsion von wasserunlöslichen Organosiliziumverbindungen modifiziert.

Die bekannten mit Silan ex-situ modifizierten Füllstoffe haben den Nachteil, daß die dynamischen Gummieigenschaften nicht gleich oder besser sondern tendenziell eher schlechter sind als bei den in-situ miteinander gemischten Füllstoffen und Silanen. Im Falle von Füllstoffen mit großer, spezifischer Oberfläche beziehungsweise einer hohen Oberflächenstruktur ist die Imprägnierung nicht homogen, sondern vielmehr meist auf eine dünne Oberflächenschicht beschränkt und deshalb nicht zufriedenstellend.

Die bekannten Verfahren zur Modifizierung von Füllstoffen für Gummi- und Kunststoffanwendungen mit oberflächenaktiven Silanen oder deren Mischungen basieren auf der Verwendung von Wasser, organischen Lösungsmitteln oder dem direkten Aufsprühen der Organosiliziumverbindung auf die Oberfläche des Füllstoffs mit einer nachfolgenden Temperreaktion. Die wasserunlöslichen, kautschuktypischen Silane können nur in kohlenwasserstoffbasiernde Lösungsmittel, die meist gesundheitsschädlich und hoch brennbar sind, umgesetzt werden.

Aufgabe der vorliegenden Erfindung ist es einen silanmodifizierten biopolymeren, biooligomeren, oxidischen oder silikatischen Füllstoff herzustellen, der eine verbesserte Belegung der Oberfläche mit den entsprechenden kautschukreaktiven Silanen aufweist und der daher vergleichbare dynamische Eigenschaften in Kautschuk besitzt, wie bekannte, in-situ hergestellte Silan-Füllstoffmischungen und verbesserte dynamische Eigenschaften als bekannte, ex-situ hergestellte Silan-Füllstoffabmischungen, in Kautschuk aufweist.

Eine weitere Aufgabe der vorliegenden Erfindung ist es ein Verfahren zur Modifizierung von biopolymeren, biooligomeren, oxidischen oder silikatischen Füllstoffen mit Silanen bereitzustellen, bei dem die Modifizierungsreaktion nicht in Wasser oder organischem Lösungsmittel durchgeführt wird.

Gegenstand der Erfindung ist ein silanmodifizierter biopolymerer, biooligomerer, oxidischer oder silikatischer Füllstoff, erhältlich indem man mindestens einen biopolymeren, biooligomeren, oxidischen oder silikatischen Füllstoff in einem verdichteten Gas mit mindestens einem Silan umsetzt. Der silanmodifizierte biopolymere, biooligomere, oxidische oder silikatische Füllstoff kann eine BET-Oberfläche zwischen 0,5 m²/g und 500 m²/g, vorzugsweise zwischen 5 und 250 m²/g, haben.

Der silanmodifizierte biopolymere, biooligomere, oxidische oder silikatische Füllstoff kann zwischen 0,1 und 50,0 Gew.-%, vorzugsweise zwischen 1,0 und 25,0 Gew.-%, besonders bevorzugt zwischen 1,0 und 9,0 Gew.-%, Silan enthalten.

Das Silan kann chemisch und/oder physikalisch mit der Oberfläche der Füllstoffe verbunden sein.

Ein weiterer Gegenstand der Erfindung ist ein Verfahren zur Herstellung von einem silanmodifizierten biopolymeren, biooligomeren, oxidischen oder silikatischen Füllstoff, welches dadurch gekennzeichnet ist, daß man mindestens ein biopolymeren, biooligomeren, oxidischen oder silikatischen Füllstoff in einem verdichteten Gas mit mindestens einem Silan umsetzt.

Als Silan kann man eine Organosiliziumverbindung der allgemeinen Formel (I)

Z-A-Sₓ-A-Z (I)

verwenden, in der
x eine Zahl von 1 bis 12, vorzugsweise 1 bis 8, besonders bevorzugt 2 bis 6 ist,
Z gleich SiX¹X²X³ ist und
X¹, X², X³ jeweils unabhängig voneinander bedeuten können Wasserstoff (-H),
Halogen oder Hydroxy (-OH),
ein Alkylsubstituent, vorzugsweise Methyl- oder Ethyl-, Alkenylsäuresubstituent, beispielsweise Acetoxy- R-(C=O)O-, oder ein substituierter Alkyl-, beziehungsweise Alkenylsäuresubstituent, zum Beispiel Oximato- R¹₂C=NO-,
eine lineare oder verzweigte Kohlenwasserstoffkette mit 1-6 Kohlenstoffatomen,
ein Cycloalkanrest mit 5-12 Kohlenstoffatomen,
ein Benzylrest oder ein halogen- oder alkylsubstituierter Phenylrest,
Alkoxygruppen, vorzugsweise (C₁-C₄) Alkoxy, besonders bevorzugt Methoxy oder Ethoxy, mit linearen oder verzweigten Kohlenwasserstoffketten mit (C₁₋₆) Atomen,
eine Cycloalkoxygruppe mit (C₅₋₁₂)-Atomen,
eine halogen- oder alkylsubstituierte Phenoxygruppe oder eine Benzyloxygruppe,
A eine (C₁-C₁₆), vorzugsweise (C₁-C₄), verzweigte oder unverzweigte, gesättigte oder ungesättigte, aliphatische, aromatische oder gemischt aliphatische/aromatische zweibindige Kohlenwasserstoffgruppe ist.

A kann linear oder verzweigt sein und gesättigte wie auch ungesättigte Bindungen enthalten. A kann mit verschiedensten Substituenten versehen sein, wie zum Beispiel -CN, Halogenen, beispielsweise -Cl, -Br oder -F, -OH, Alkoxiden -OR¹ beziehungsweise -O-(C=O)-R¹. Als A können bevorzugt CH₂, CH₂CH₂, CH₂CH₂CH₂, CH₂CH(CH₃), CH₂CH₂CH₂CH₂, CH₂CH₂CH(CH₃), CH₂CH(CH₃)CH₂, CH₂CH₂CH₂CH₂CH₂, CH₂CH (CH₃)CH₂CH₂, CH₂CH₂CH(CH₃)CH₂, CH(CH₃)CH₂CH(CH₃) oder CH₂CH(CH₃)CH(CH₃) verwendet werden.

Als Silan der allgemeinen Formel (I) kann man beispielsweise folgende Verbindungen verwenden:
[(MeO)₃Si(CH₂) ₃]₂S, [(MeO)₃Si(CH₂)₃]₂S₂, [(MeO)₃Si(CH₂)₃]₂S₃, [(MeO)₃Si(CH₂)₃]₂S₄, [(MeO)₃Si(CH₂)₃]₂S₅, [(MeO)₃Si(CH₂)₃]₂S₆, [(MeO)₃Si(CH₂)₃]₂S₇, [(MeO)₃Si(CH₂)₃]₂S₈, [(MeO)₃Si(CH₂)₃]₂S₉, [(MeO)₃Si(CH₂)₃]₂S₁₀, [(MeO)₃Si(CH₂)₃]₂S₁₁, [(MeO)₃Si(CH₂)₃]₂S₁₂, [(MeO)₃Si(CH₂)₃]₂S, [(EtO)₃Si(CH₂)₃]₂S₂, [(EtO)₃Si(CH₂)₃]₂S₃, [(EtO)₃Si(CH₂)₃]₂S₄, [(EtO)₃Si(CH₂)₃]₂S₅, [(EtO)₃Si(CH₂)₃]₂S₆, [(EtO)₃Si(CH₂)₃]₂S₇, [(EtO)₃Si(CH₂)₃]₂S₈, [(EtO)₃Si(CH₂)₃]₂S₉, [(EtO)₃Si (CH₂)₃]₂S₁₀, [(EtO)₃Si (CH₂)₃]₂S₁₁, [(EtO)₃Si(CH₂)₃]₂S₁₂, [(C₃H₇O)₃Si (CH₂)₃]₂S, [(C₃H₇O)₃Si(CH₂)₃]₂S₂, [(C₃H₇O)₃Si(CH₂)₃]₂S₃, [(C₃H₇O)₃Si(CH₂)₃]₂S₄, [(C₃H₇O)₃Si(CH₂)₃]₂S₅, [(C₃H₇O)₃Si(CH₂)₃]₂S₆, [(C₃H₇O)₃Si(CH₂)₃]₂S₇, [(C₃H₇O)₃Si(CH₂)_{3]2}S₈, [(C₃H₇O)₃Si(CH₂)₃]₂S₉, [(C₃H₇O)₃Si(CH₂)₃]₂S₁₀, [(C₃H₇O)₃Si(CH₂)₃]₂S₁₁ oder [(C₃H₇O)₃Si(CH₂)₃]₂S₁₂.

Als Silan können Verbindungen, beschrieben in DE 198 44 607 verwendet werden.

Als Silan kann man eine Organosiliziumverbindung der allgemeinen Formel (II)

X¹X²X³Si-A-S-SiR¹R²R³ (II)

verwenden, in der
X¹, X², X³ und A unabhängig voneinander dieselbe Bedeutung wie in Formel (I) haben,
R¹, R², R³ jeweils unabhängig voneinander sind und
(C₁-C₁₆) Alkyl, vorzugsweise (C₁-C₄) Alkyl, besonders bevorzugt Methyl- und Ethyl-,
(C₁-C₁₆) Alkoxy, vorzugsweise (C₁-C₄) Alkoxy, besonders bevorzugt Methoxy und Ethoxy,
(C₁-C₁₆) Haloalkyl, Aryl, (C₇-C₁₆) Aralkyl, H, Halogen oder X¹X²X³Si-A-S- bedeuten.

Als Silan der allgemeinen Formel (II) kann man beispielsweise folgende Verbindungen verwenden:
(EtO)₃-Si-(CH₂)₃-S-Si(CH₃)₃, [(EtO)₃-Si-(CH₂)₃-S]₂Si(CH₃)₂, [(EtO)₃-Si-(CH₂)₃-S]₃Si(CH₃), [(EtO)₃-Si-(CH₂)₃-S]₂Si(OEt)₂, [(EtO)₃-Si-(CH₂)₃-S]₄Si, (EtO)₃-Si-(CH₂)₃-S-Si(OEt)₃, (MeO)₃-Si-(CH₂)₃-S-Si(C₂H₅)₃, [(MeO)₃-Si-(CH₂)₃-S]₂Si(C₂H₅)₂, [(MeO)₃-Si-(CH₂)₃-S]₃Si(CH₃), [MeO)₃-Si-(CH₂)₃-S]₂Si(OMe)₂, [(MeO)₃-Si-(CH₂)₃-S]₄Si, (MeO)₃-Si-(CH₂)₃-S-Si(OMe)₃, (EtO)₃-Si-(CH₂)₂-CH(CH₃)-S-Si(CH₃)₃, (EtO)₃-Si-(CH₂)₂-CH(CH₃)-S-Si(C₂H₅)₃, (EtO)₃-Si-(CH₂)₂-CH(CH₃)-S-Si(C₆H₅)₃ oder (EtO)₃-Si-(CH₂)₂(p-C₆H₄)- S-Si(CH₃)₃.

Als Silan kann man eine Organosiliziumverbindung der allgemeinen Formel (III)

X¹X²X³Si-Alk (III)

verwenden, in der
x¹, X², X³ jeweils unabhängig voneinander dieselbe Bedeutung wie in Formel (I) haben und
Alk ein geradkettiges, verzweigtes oder zyklisches (C₁-C₁₈)Alkyl, beispielsweise Methyl-, Ethyl-, n-Propyl, n-Butyl, n-Pentyl, n-Hexyl, Isopropyl oder tert.-Butyl,
(C₁-C₅) Alkoxy, beispielsweise Methoxy, Ethoxy, Propoxy, Butoxy, Isopropoxy, Isobutoxy oder Pentoxy,
Halogen, beispielsweise Fluor, Chlor, Brom oder Jod, Hydroxy, Thiol, Nitril, (C₁-C₄) Haloalkyl, -NO₂, (C₁-C₈) Thioalkyl, -NH₂, -NHR¹, -NR¹R², Alkenyl, Allyl-, Vinyl-, Aryl oder (C₇-C₁₆) Aralkyl ist.

Unter der Bezeichnung Alkenyl- können die Vinylgruppe sowie geradkettige, verzweigte oder zyklische Fragmente zusammengefaßt werden, die eine oder mehrere Kohlenstoffdoppelbindungen enthalten können.

Unter der Bezeichnung zyklische Alkyl- oder Alkenylfragmente können sowohl monocyclische als auch bicyclische oder polyzyklische Strukturen, sowie zyklische Strukturen, die mit Alkylsubstituenten, beispielsweise Norbornyl-, Norbornenyl-, Ethylnorbornyl-, Ethylnorbornenyl-, Ethylcyclohexyl-, Ethylcyclohexenyl-, oder Cyclohexylcyclohexyl-Gruppen versehen sind, zusammengefaßt werden.

Unter Aryl können Phenyle, Biphenyle oder sonstige benzoide Verbindungen verstanden werden, die gegebenenfalls mit (C₁-C₃)Alkyl-, (C₁-C₃)Alkoxy-, Halogen-, Hydroxy- oder mit Heteroatomen, wie NR¹R²OR¹, PR¹R²R³, SH oder SR¹ substituiert sind.

Aralkyle können die oben bezeichneten Aryle sein, die über eine (C₁-C₆) Alkylkette, die ihrerseits mit (C₁-C₃) Alkyl-, (C₁-C₃) Alkoxy- oder Halogen-substituiert sein kann, mit dem entsprechenden Siliziumatom oder Schwefelatom oder mit beiden verbunden sind. Verfügt die Aryl-Gruppe über ein Heteroatom, wie O oder S, kann die (C₁-C₆) Alkylkette auch über das Heteroatom mit dem Siliziumatom und/oder dem Schwefelatom eine Verbindung aufweisen.

Als Silan der allgemeinen Formel (III) kann man beispielsweise folgende Verbindungen verwenden:
(EtO)₃-Si-(CH₂)₃-H, (MeO)₃-Si-(CH₂)₃-H, (EtO)₃-Si-(CH₂)₈-H, (MeO)₃-Si-(CH₂)₈-H, (EtO)₃-Si-(CH₂)₁₆-H, (MeO)₃-Si-(CH₂)₁₆-H, (Me)₃Si-(OMe), ((Et)₃Si-(OMe), (C₃H₇)₃Si-(OMe), (C₆H₅)₃Si-(OMe), (Me)₃Si-(OEt), ((Et)₃Si-(OEt), (C₃H₇)₃Si-(OEt), (C₆H₅)₃Si-(OEt), (Me)₃Si-(OC₃H₇), ((Et)₃Si-(OC₃H₇), (C₃H₇)₃Si-(OC₃H₇), (C₆H₅)₃Si-(OC₃H₇), (Me)₃SiCl, ((Et)₃SiCl, (C₃H₇)₃SiCl, (C₆H₅)₃SiCl, Cl₃-Si-CH₂-CH=CH₂, (MeO)₃-Si-CH₂-CH=CH₂, (EtO)₃-Si-CH₂-CH=CH₂, Cl₃-Si-CH=CH₂, (MeO)₃-Si-CH=CH₂, oder (EtO)₃-Si-CH=CH₂.

Als Silan kann man eine Organosiliziumverbindung der allgemeinen Formeln (IV) oder (V)

[[(ROC(=O))ₚ-(G)ⱼ]ₖ-Y-S]ᵣ-G-(SiX¹X²X³)ₛ (IV)

[(X¹X²X³Si)_{q}-G]ₐ-[Y-[S-G-SiX¹X²X³]_{b}]_{c} (V)

verwenden,
in der Y eine polyvalente Spezies (Q)_{z}D(=E) darstellt, wobei folgendes gilt:
p ist 0 bis 5, r ist 1 bis 3, z ist 0 bis 2, q ist 0 bis 6, a ist 0 bis 7, b ist 1 bis 3, j ist 0 bis 1, aber es kann, wenn p = 1 auch häufig 0 sein, c ist 1 bis 6, bevorzugt 1 bis 4, t ist 0 bis 5, s ist 1 bis 3, k ist 1 bis 2, unter der Voraussetzung, daß
(1) falls (D) ein Kohlenstoff, Schwefel oder Sulfonyl ist, gilt, daß a + b = 2 und k = 1,
(2) falls (D) ein Phosphoratom ist, gilt, daß a + b = 3 solange c ≥ 1 und b = 1, wobei a = c + 1,
(3) falls (D) ein Phosphoratom ist, gilt, daß k = 2, ist, Y eine polyvalente Spezies (Q)_{z}D(=E) darstellt, bevorzugt -C(=NR)-, -SC(=NR)-, -SC(=O)-, (-NR)C(=O)-, (-NR)C(=S)-, -OC(=O)-, -OC(=S)-, -C(=O)-, -SC(=S)-, -C(=S)-, -S(=O)-, -S(=O)₂-, -OS(=O)₂-, (-NR)S(=O)₂-, -SS(=O)-, -OS(=O)-, (NR)S(=O)-, -SS(=O)₂-, (-S)₂P(=O)-, -(-S)P(=O)-, -P(=O)(-)₂, (-S)₂P(=S)-, -(-S)P(=S)-, -P(=S)(-)₂, (-NR)₂P(=O)-, (-NR) (-S)P(=O)-, (-O) (-NR)P(=O)-, (-O) (-S)P(=O)-, (-O)₂P(=O)-, -(-O)P(=O)-, -(-NR)P(=O)-, (-NR)₂P(=S)-, (-NR) (-S)P(=S)-, (-O) (-NR)P(=S)-, (-O) (-S)P(=S)-, (-O)₂P(=S)-, -(-O)P(=S)-, oder -(-NR)P(=S)-,
in jeder dieser Gruppen ist das Atom (D) doppelt mit dem Heteroatom (E) verbunden, das wiederum mit dem Schwefelatom (S) verbunden ist, welches mittels einer Gruppe (G) mit dem Siliziumatom (Si) verknüpft ist,
R¹ unabhängig voneinander H,
eine gerade, zyklische oder verzweigte Alkylkette, vorzugsweise (C₁-C₁₈)Alkyl, besonders bevorzugt (C₁-C₄)Alkyl bedeuten,
gegebenenfalls Alkylketten die ungesättigte Anteile wie Doppelbindungen (Alkene), Dreifachbindungen (Alkine) oder auch Alkylaromaten (Aralkyl) oder Aromaten beinhalten und die die gleichen Bedeutungen wie in Formel (II) aufweisen,
G unabhängig von den übrigen Substituenten, Wasserstoff, eine gerade, zyklische oder verzweigte Alkylkette mit (C₁-C₁₈) bedeutet, gegebenenfalls können die Alkylketten einen ungesättigten Anteil, wie Doppelbindungen (Alkene), Dreifachbindungen (Alkine) oder auch Alkylaromaten (Aralkyl) oder Aromaten beinhalten,
wenn p = 0 in Formel (IV) ist, ist G vorzugsweise Wasserstoff (H),
G entspricht nicht der Struktur eines α, β-ungesättigten Fragments, welches mit dem Y -Fragment in der Weise verbunden ist, daß ein α, β-ungesättigtes Thiocarbonylfragment entsteht,
X¹, X² und X³ jeweils unabhängig voneinander die Bedeutung wie in Formel (I) besitzen.

Ein Index p von 0 bis 2 ist bevorzugt, wobei X¹, X² oder X³ ein RO- beispielsweise RC(=O)O- ist. Besonders bevorzugt ist ein Fragment mit p = 0, X¹, X² beispielsweise X³ = Ethoxy- und mit G = Alkylgerüst beziehungsweise substituiertes Alkylgerüst mit C₃ bis C₁₂. Es kann mindestens ein X ungleich -R¹ sein.

In (Q)_{z}D(=E) kann Q Sauerstoff, Schwefel oder (-NR-), D kann Kohlenstoff, Schwefel, Phosphor oder Sulfonyl, E kann Sauerstoff, Schwefel oder (=NR¹) sein.

Bevorzugte Beispiele für die Funktion (-YS-) in den Formeln (IV) und (V) sind:
Thiocarboxylatester -C(=O)-S-, Dithiocarboxylate -C(=S)-S-, Thiocarbonatester -O-C(=O)-S-, Dithiocarbonateester -S-C(=O)-S- und -O-C(=S)-S-, Trithiocarbonatester -S-C(=S)-S-, Dithiocarbamatester -N-C(=S)-S-, Thiosulfonateester -S(=O)₂-S-, Thiosulfatester -O-S(=O)₂-S-, Thiosulfamatester (-N-)S(=O)₂-S-, Thiosulfinatester -C-S(=O)-S-, Thiosulfitester -O-S(=O)-S-, Thiosulfimatester N-S(=O)-S-, Thiophosphatester P(=O)(O-)₂(S-), Dithiophosphatester P(=O)(O-) (S-)₂ oder P(=S)(O-)₂(S-), Trithiophosphatester P(=O)(S-)₃ oder P(=S)(O-)(S-)₂, Tetrathiophosphatester P(=S)(S-)₃, Thiophosphamtester -P(=O)(-N-)(S-), Dthiophosphamatester -P(=S)(-N-)(S-, Thiophosphoramidatester (-N-)P(=O)(O-)(S-), Dithiophosphoramidatester (-N-)P(=O)(S-)₂ oder (-N-)P(=S)(O-)(S-) oder Trithiophosphoramidatester (-N-)P(=S)(S-)₂.

Als Silan der allgemeinen Formel (IV) oder (V) kann man beispielsweise folgende Verbindungen verwenden:
2-Triethoxysilyl-1 -ethylthioacetat, 2-Trimethoxysilyl-1-ethylthioacetat, 2-(Methyldimethoxysilyl)-1 -ethylthioacetat, 3-Trimethoxysilyl-1-propylthioacetat, Triethoxysilylmethylthioacetat, Trimethoxysilylmethylthioacetat, Triisopropoxysilylmethylthioacetat, Methyldiethoxysilylmethylthioacetat, Methyldimethoxysilylmethylthioacetat, Methyldiisopropoxysilylmethylthioacetat, Dimethylethoxysilylmethylthioacetat, Dimethylmethoxysilylmethylthioacetat, Dimethylisopropoxysilylmethylthioacetat, 2-Triisopropoxysilyl-1-ethylthioacetat, 2-(Methyldiethoxysilyl)-1-ethylthioacetat, 2-(Methyldiisopropoxysilyl)-1-ethylthioacetat, 2-(Dimethylethoxysilyl)-1-ethylthioacetat, 2-(Dimethylmethoxysilyl)-1-ethylthioacetat, 2-(Dimethylisopropoxysilyl)-1-ethylthioacetat, 3-Triethoxysilyl-1-propylthioacetat, 3-Triisopropoxysilyl-1-propylthioacetat, 3-Methyldiethoxysilyl-1-propylthioacetat, 3-Methyldimethoxysilyl-1-propylthioacetat, 3-Methyldiisopropoxysilyl-1-propylthioacetat, 1-(2-Triethoxysilyl-1-ethyl)-4-thioacetylcyclohexan, 1-(2-Triethoxysilyl-1-ethyl)-3-thioacetylcyclohexan, 2-Triethoxysilyl-5-thioacetylnorbomen, 2-Triethoxysilyl-4-thioacetylnorbomen, 2-(2-Triethoxysilyl-1-ethyl)-5-thioacetylnorbomen, 2-(2-Triethoxysilyl-1-ethyl)-4-thioacetylnorbomen, 1-(1 -oxo-2-thia-5-triethoxysilylpenyl)benzoesäure, 6-Triethoxysilyl-1-hexylthioacetat, 1-Triethoxysilyl-5-hexylthioacetat, 8-Triethoxysilyl-1-octylthioacetat, 1-Triethoxysilyl-7-octylthioacetat, 6-Triethoxysilyl-1-hexylthioacetat, 1-Triethoxysilyl-5-octylthioacetat, 8-Trimethoxysilyl-1-octylthioacetat, 1-Trimethoxysilyl-7-octylthioacetat, 10-Triethoxysilyl-1-decylthioacetat, 1-Triethoxysilyl-9-decylthioacetat, 1-triethoxysilyl-2-butylthioacetat, 1-Triethoxysilyl-3-butylthioacetat, 1-Triethoxysilyl-3-methyl-2-butylthioacetat, 1-Triethoxysilyl-3-methyl-3-butylthioacetat, 3-Trimethoxysilyl-1-propylthiooctoat, 3-Triethoxysilyl-1-propylthiopalmitat, 3-Triethoxysilyl-1-propylthiooctoat, 3-Triethoxysilyl-1-propylthiobenzoat, 3-Triethoxysilyl-1-propylthio-2-ethylhexanoat, 3-Methyldiacetoxysilyl-1-propylthioacetat, 3-Triacetoxysilyl-1-propylthioacetat, 2-Methyldiacetoxysilyl-1-ethylthioacetat, 2-Triacetoxysilyl-1-ethylthioacetat, 1-Methyldiacetoxysilyl-1-ethylthioacetat oder 1-Triacetoxysilyl-1-ethylthioacetat.

Als Silan kann man eine Organosiliziumverbindung der allgemeinen Formel (VI)

X¹X²X³Si-A-Sub (VI)

verwenden, wobei X¹, X², X³ und A, jeweils unabhängig voneinander, die Bedeutung gemäß Formel (I) haben und Sub -SH, -Cl, -Br, -I, -NH₂, -NH(A-SiX¹X²X³), -N(A-SiX¹X²X³)₂, -NH-CH₂-CH₂-NH₂, NH-CH₂-CH₂-NH-CH₂-CH₂-NH₂, NHEt, NEt₂, NH(C₄H₉), O-C(O)-CMe=CH₂, O-CH₂-(CH-O-CH₂) (DS Glymo) oder -SCN ist.

Als Silan der allgemeinen Formel (VI) kann man beispielsweise folgende Verbindungen verwenden:
(MeO)₃Si-(CH₂)₃-Cl, (MeO)₃Si-(CH₂)₃-SH, (MeO)₃Si-(CH₂)₃-NH₂, (MeO)₃Si-(CH₂)₃-SCN, (MeO)₃Si-(CH₂)₃-O-C(O)CMe=CH₂, (MeO)₃Si-(CH₂)₃-O-CH₂-(CH-O-CH₂), (EtO)₃Si-(CH₂)₃-Cl, (EtO)₃Si-(CH₂)₃-NH₂, (EtO)₃Si-(CH₂)₃-SH, (EtO)₃Si-(CH₂)₃-SCN, (EtO)₃Si-(CH₂)₃-O-C(O)CMe=CH₂, (EtO)₃Si-(CH₂)₃-O-CH₂-(CH-O-CH₂), (C₃H₇O)₃Si-(CH₂)₃-Cl, (C₃H₇O)₃Si-(CH₂)₃-SH, (C₃H₇O)₃Si-(CH₂)₃-SCN, (C₃H₇O)₃Si-(CH₂)₃-O-C(O)CMe=CH₂, oder (C₃H₇O)₃Si-(CH₂)₃-NH₂, (C₃H₇O)₃Si-(CH₂)₃-O-CH₂-(CH-O-CH₂)

Als Silan kann man Oligomere der Organosiliziumverbindungen der allgemeinen Formel (I)-(VI) verwenden. Die Oligomere können durch Oligomerisierung oder Cooligomerisierung hergestellt werden.

Oligomere Silane sind zum Beispiel in EP 652 245 B1, EP 0 700 951 B1, EP 0 978 525 A2 und DE 199 29 021 A1 beschrieben.

Als Silanverbindungen zur Modifizierung von Füllstoffen können auch Mischungen von Silanen verwendet werden, beispielsweise Mischungen der Silane der allgemeinen Formel I-VI oder Mischungen der oligomeren oder polymeren Siloxane von Silanen der allgemeinen Formel I-VI oder Mischungen von Silanen der allgemeinen Formel I-VI mit Mischungen der oligomeren oder polymeren Siloxane von Silanen der allgemeinen Formel I-VI.

Als biopolymerer, biooligomerer, oxidischer oder silikatischer Füllstoff kann ein natürlicher und/oder synthetischer Füllstoff verwendet werden.

Der biopolymere, biooligomere, oxidische oder silikatische Füllstoff kann -OH oder -OAcetat, beispielsweise -O-C(O)-CH₃, Gruppen an der Oberfläche enthalten, die mit den reaktiven Gruppen der verwendeten Silane, vorzugsweise deren Alkoxygruppen, reagieren können.

Der biopolymere, biooligomere, oxidische oder silikatische Füllstoff kann mit den Kautschuken verträglich sein und die für diese Verwendung notwendige Feinteiligkeit und Verstärkungswirkung in der Polymermatrix aufweisen.

Als biopolymerer oder biooligomerer Füllstoff kann natürliche oder modifizierte Stärke, Cellulose, Amylose, Amylopectin, Celluloseacetat, Maltose, Cellobiose, Lactose, Saccharose, Raffinose, Glycogen, Pektinstoffe, Chitin oder natürliche oder modifizierte Proteine verwendet werden.

Als natürlicher, silikatischer Füllstoff kann Silikat, beispielsweise Kaolin, Mica, Kieselgur, Diatomeenerde, Talkum, Wollastonit oder Clay oder auch Silikate unter anderem in Form von Glasfasern oder Glasgeweben verwendet werden.

Als oxidische Füllstoffe können fast alle Arten von Oxiden, beispielsweise Aluminiumoxid, Aluminiumhydroxid oder - trihydrat, Zinkoxid, Boroxide, Magnesiumoxide oder auch Übergangsmetalloxide, wie Titandioxid, verwendet werden.

Als oxidischer oder silikatischer Füllstoff können des weiteren Aluminiumsilikate, Silikate, Zeolithe, gefällte oder pyrogene Kieselsäuren mit BET-Oberflächen (gemessen mit gasförmigem Stickstoff) von 1 bis 1000 m²/g, bevorzugt bis 300 m²/g, verwendet werden.

Beispielsweise können die von der Degussa-Hüls AG unter dem Handelsnamen Ultrasil vertriebenen Fällungskieselsäuren (Ultrasil 7000 GR, Ultrasil VN 3, Ultrasil VN 3 GR, Ultrasil VN 2 und Ultrasil VN 2 GR), sowie die von PPG Industries Inc. vertriebenen Kieselsäuren der Hisil Serie (Hi-Sil® 195G, Hi-Sil® 190G, Hi-Sil® 170G, Hi-Sil® 255G, Hi-Sil® EZ, Hi-Sil® 243LD, Hi-Sil® 233, Hi-Sil® 315) und die von der Rhodia vertriebenen Produkte der Zeosil-Serie, zum Beispiel Zeosil 115 Gr, Zeosil 125 Gr, Zeosil 145 Gr, Zeosil 165 Gr, Zeosil 175 Gr, Zeosil 195 Gr, Zeosil 215 Gr, verwendet werden. Analoges gilt auch für Kieselsäuren anderer Hersteller die ähnliche Eigenschaften beispielsweise Produktcharakteristiken haben oder analytischen Daten wie die oben genannten Kieselsäuren aufweisen.

Als verdichtetes Gas können Verbindungen, die unter normalen Temperatur und Druckbedingungen gasförmig und als Trägerfluid für die Silane geeignet sind, verwendet werden. Beispielsweise können Kohlendioxid, Helium, Stickstoff, Distickstoffmonoxid, Schwefelhexafluorid, gasförmige Alkane mit 1 bis 5 C-Atomen (Methan, Ethan, Propan, n-Butan, Isobutan, Neopentan), gasförmige Alkene mit 2 bis 4 C-Atomen (Ethylen, Propylen, Buten), gasförmige Alkine (Acetylen, Propin und Butin-1), gasförmige Diene (Propadien), gasförmige Fluorkohlenwasserstoffe, Chlor- und/oder Fluorchlorkohlenwasserstoffe (Freone, CKC, HCFC) oder deren aufgrund der laufenden Gesetzgebung verwendeten Ersatzstoffe oder Ammoniak, sowie Gemische dieser Stoffe verwendet werden.

Vorzugsweise kann als verdichtetes Gas Kohlendioxid verwendet werden, da es ungiftig, nicht brennbar, wenig reaktionsfähig und kostengünstig ist. Außerdem können die erforderlichen superkritischen Bedingungen leicht erreicht werden, denn der kritische Druck beziehungsweise die kritische Temperatur liegen bei 73 bar und 31°C. Außerdem kann das als verdichtete Gas verwendete verdichtete Kohlendioxid bakteriostatisch wirken.

Verdichtete Gase können nach E.Stahl, K.W.Quirin, D.Gerard, "Verdichtete Gase zur Extraktion und Raffination", Springer-Verlag, Seite 12-13 definiert werden. Verdichtete Gase können überkritische Gase, kritische Gase oder Gase im verflüssigten Zustandsbereich sein.

Das verdichtete Gas ist für diese spezielle Anwendung ausgesprochen vorteilhaft. Aufgrund des hohen Löse- und Diffusionsvermögens, der niedrigen Viskosität und der Fähigkeit speziell Silanen beziehungsweise Silanoligomeren hohe Diffusionsgeschwindigkeiten im verdichteten Gas zu ermöglichen, so daß sich ein Stoff in den Zwischenräumen des mikroporösen Substrats ablagern kann, eignen sie sich ausgezeichnet für das Imprägnieren von mikroporösen Feststoffen mit monomeren beziehungsweise oligomeren Stoffen. Die Silane können durch das verdichtete Gas nach der Applikation in die Poren und Kanäle der porösen Füllstoffe hineintransportiert werden. Zum anderen können verdichtete Gase, da sie unter Normalbedingungen gasförmig vorliegen, nach der Behandlung des Füllstoffs leicht von diesem abgetrennt werden und besitzen speziell im Fall von Kohlendioxid zudem kaum umweltgefährliches Potential, da sie im natürlichen Kohlenstoffkreislauf aufgehen oder leicht recycliert werden können.

Das verdichtete Gas kann in einem luftdicht abgeschlossenen Raum oder Behälter unter Druck gesetzt werden, in der sich das zu behandelnde Material befindet. Während dieses Prozesses kann der Druck, im allgemeinen ausgehend von Atmosphärendruck, bis zum Arbeitsdruck des erfindungsgemäßen Verfahrens gesteigert werden.

Zunächst kann man den biopolymeren, biooligomeren, oxidischen oder silikatischen Füllstoff mit einer Flüssigkeit in Kontakt bringen, die aus dem reinen Lösungsmittel, genauer dem potentiell in den verdichteten Zustand transformierbaren Gas, besteht oder aus einer bereits bereiteten Lösung des Silans in dem vorgenannten Gas, das in der Folge in den verdichteten Zustand gebracht wird. Dieser Kontakt kann beispielsweise in einem Behälter oder in einem hermetisch abgeschlossenen Raum hergestellt werden, in den der unmodifizierte Füllstoff und die silanhaltige Gasmatrix eingebracht wird. Unter "Kontakt herstellen" kann verstanden werden, daß das genannte Material in die Imprägnierflüssigkeit eingetaucht wird und von dieser benetzt und bedeckt ist, vorzugsweise, daß der biopolymere, biooligomere, oxidische oder silikatische Füllstoff vollständig eingetaucht ist, oder daß alle äußeren und inneren Oberflächen des biopolymeren, biooligomeren, oxidischen oder silikatischen Füllstoffs mit der silanhaltigen Imprägnierflüssigkeit in Kontakt sind.

Bei dem erfindungsgemäßen Verfahren kann der Druck, der auch Arbeitsdruck genannt wird, im allgemeinen zwischen 1 und 500 bar, vorzugsweise zwischen 1 und 400 bar, besonders bevorzugt zwischen 1 und 300 bar, sein.

Die Temperatur (Arbeitstemperatur), bei dem das Verfahren durchgeführt werden kann, liegt zwischen 0 und 300°C, vorzugsweise zwischen 0 und 200°C, besonders bevorzugt zwischen 10 und 120°C.

Die Löslichkeit des Silans in dem verdichteten Gas kann abhängig sein von der Art desselben, vom Druck und der Temperatur; sie kann auch moduliert und optimiert werden, indem man vor allem die beiden letzten Parameter verändert, um die physikalischen Eigenschaften des silanhaltigen Imprägniergemisches einzustellen. In manchen Fällen kann die Konzentration des Silans in der als Reaktionsmedium verwendeten Lösung die Wirksamkeit der Behandlung beeinflussen.

Die Reaktion kann man in einem typischen Reaktionsgefäß für Hochtemperatur-/Hochdruckreaktionen oder Hochdruckextraktionen durchführen.

Der Druck kann während der Modifizierung auf unterschiedlichen Druckniveaus für Zeiträume von 5-720 min, vorzugsweise 5-240 min, besonders bevorzugt 5-30 min, konstant gehalten werden und der Füllstoff kann während dieser Zeit in dem verdichteten Gas eintauchen, von diesem durchflossen oder in diesem gerührt werden.

Der biopolymere, biooligomere, oxidische oder silikatische Füllstoff und das Silan können kontinuierlich mit einem geeigneten Rühraggregat umgewälzt werden. Dabei kann die Rührgeschwindigkeit der herrschenden Temperatur und dem dabei herrschenden Druck angepasst werden.

Als Rühraggregat können Hubrührer, Blattrührer, Balkenrührer, Lochbalkenrührer, Kreuzbalkenrührer, Ankerrührer, Gitterrührer, Schaufelwalze, Propellerrührer, Schneckenrührer, Turbinenrührer, Scheibenrührer, Planetenrührer, Kreiselmischer oder Impellerrührer verwendet werden.

Das Rühraggregat kann mit 1-200 Umdrehungen, Hubbewegungen oder Umwälzungen pro Minute arbeiten.

Die verwendeten Silane können in dem verdichteten Gas ungelöst, teilweise oder auch vollständig gelöst vorliegen.

Der biopolymere, biooligomere, oxidische oder silikatische Füllstoff und das Silan können zuerst durchmischt, beziehungsweise in Kontakt gebracht und dann mit dem im verdichteten Zustand vorliegenden Gas gemischt werden.

Der biopolymere, biooligomere, oxidische oder silikatische Füllstoff kann erst mit dem im verdichteten Zustand vorliegenden Gas durchmischt, beziehungsweise in Kontakt gebracht und erst dann mit dem Silan gemischt werden.

Das Silan kann erst mit dem im verdichteten Zustand vorliegenden Gas durchmischt, beziehungsweise in Kontakt gebracht und erst dann mit dem entsprechenden biopolymeren, biooligomeren, oxidischen oder silikatischen Füllstoff gemischt werden.

Im Anschluß an die Oberflächenmodifizierung kann der silanmodifizierte biopolymere, biooligomere, oxidische oder silikatische Füllstoff eine Evakuierungs- oder Entspannungsstufe mit Abtrennung des verdichteten Gases vom Endprodukt umfassen.

Die Evakuierungs- oder Entspannungsstufe kann in weniger als 10 min durchgeführt werden.

Die Evakuierungs- oder Entspannungsstufe kann in einer Zeit zwischen 10 min und 180 min, vorzugsweise zwischen 10 min und 120 min, besonders bevorzugt zwischen 10 min und 60 min, durchgeführt werden.

Die Evakuierungs- oder Entspannungsstufe kann bei Temperaturen zwischen 1 und 300°C, vorzugsweise zwischen 1 und 100°C, besonders bevorzugt zwischen 50 und 100°C, und ganz besonders bevorzugt bei Temperaturen zwischen 70-100°C, durchgeführt werden.

Ein weiterer Gegenstand der Erfindung sind Kautschukmischungen, welche dadurch gekennzeichnet sind, daß sie Kautschuk, den erfindungsgemäßen silanmodifizierten biopolymeren, biooligomeren, oxidischen oder silikatischen Füllstoff, gegebenenfalls gefällte Kieselsäure und / oder Ruß und / oder weitere Kautschukhilfsmittel enthalten.

Für die Herstellung erfindungsgemäßer Kautschukmischungen können Naturkautschuk oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie umfassen unter anderem Polybutadien (BR),Polyisopren (IR),Styrol/Butadien-Copolymerisate mit Styrolgehalten von 1 bis 60, vorzugsweise 5 bis 50 Gew.-% (E- oder S-SBR), Isobutylen/Isopren-Copolymerisate (IIR), Butadien/Acrylnitril-Copolymere mit Acrylnitrilgehalten von 5 bis 60, vorzugsweise 10 bis 50 Gew. -% (NBR), Ethylen/Propylen/Dien-Copolymerisate (EPDM), sowie Mischungen dieser Kautschuke.

Die erfindungsgemäßen Kautschukmischungen können weitere Kautschukhilfsprodukte, wie beispielsweise Reaktionsbeschleuniger, -verzögerer, Alterungsschutzmittel, Stabilisatoren, Verarbeitungshilfsmittel, Weichmacher, Wachse, Metalloxide sowie Aktivatoren, wie Triethanolamin, Polyethylenglykol oder Hexantriol, sowie andere Kautschukhilfsprodukte, die der Kautschukindustrie bekannt sind, enthalten.

Die Kautschukhilfsmittel können in üblichen Mengen, die sich unter anderem nach dem Verwendungszweck richten, eingesetzt werden. Übliche Mengen sind zum Beispiel Mengen von 0,1 bis 50 Gew.-% bezogen auf Kautschuk.

Als Vernetzer können Schwefel, organische Schwefelspender oder Radikalbildner dienen. Die erfindungsgemäßen Kautschukmischungen können darüber hinaus Vulkanisationsbeschleuniger enthalten.

Beispiele für geeignete Vulkanisationsbeschleuniger sind Mercaptobenzthiazole, Sulfenamide, Guanidine, Thiurame, Dithiocarbamate, Thioharnstoffe und Thiocarbonate.

Die Vulkanisationsbeschleuniger und Vernetzer können in Mengen von 0,1 bis 10 Gew.-%, bevorzugt 0,1 bis 5 Gew.-%, bezogen auf Kautschuk, eingesetzt werden.

Die Abmischung der Kautschuke mit dem erfindungsgemäßen Füllstoff, gegebenenfalls mit gefällter Kieselsäure und / oder Ruß und / oder weiteren Kautschukhilfsmitteln kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der erfindungsgemäße Füllstoff, gegebenenfalls die gefällte Kieselsäure und / oder Ruß und / oder weitere Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Die so erhaltene Kautschukmischung kann dann in bekannter Weise in einem Innenmischer oder auf einer Walze bei 40-110°C mit den Vernetzungschemikalien versetzt und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200°C, bevorzugt 130 bis 180°C, gegebenenfalls unter Druck von 10 bis 200 bar erfolgen.

Die erfindungsgemäßen Kautschukmischungen eignen sich zur Herstellung von Formkörpern aus Kautschuk, zum Beispiel für die Herstellung von Luftreifen für Personen- und Lastkraftwagen, Reifenlaufflächen für Personen- und Lastkraftwagen, Reifenbestanteilen für Personen- und Lastkraftwagen, wie zum Beispiel Seitenwand, Innenliner und undertread, Kabelmänteln, Schläuchen, Treibriemen, Förderbändern, Walzenbelägen, Fahrrad und Motorradreifen und deren Bestanteilen, Schuhsolen, Dichtungsringen, Profilen und Dämpfungselementen.

Die erfindungsgemäß silanmodifizierten biopolymeren, biooligomeren, oxidischen oder silikatischen Füllstoffe weisen gegenüber den rein physikalischen Abmischungen, zum Beispiel von Bis (3-triethoxysilylpropyl)tetrasulfan mit Kieselsäure, wie sie zum Beispiel aus der US-PS 40 76 550 bekannt sind, den Vorteil einer hohen Lagerstabilität und damit Leistungsstabilität auf.

Gegenüber dem bereits seit Jahren in der Kautschukindustrie angewandten in situ-Verfahren und dem dabei notwendigen unbehandelten Füllstoff, besitzen die erfindungsgemäßen silanmodifizierten biopolymeren, biooligomeren, oxidischen oder silikatischen Füllstoffe die Vorteile eines geringen Wassergehaltes des behandelten Füllstoffs, einer geringeren Feuchtigkeitsaufnahme, sowie eines höheren Stampfgewichts und einer höheren Schüttdichte gegenüber dem unbehandeltem Füllstoff. Gegenüber bekannten silanmodifizierten Füllstoffen zeichnen sie sich durch eine bessere Lagerstabilität, bessere Dispersion im Gummi und darüber hinaus durch ein für den Anwender in der kautschukverarbeitenden Industrie besseres verarbeitungstechnisches Verhalten (homogene Mischungsherstellung, Einsparen von Mischstufen und Mischzeiten) aus.

Während beim Mischprozess des in-situ-Verfahrens eine chemische Reaktion durchgeführt werden muss, bei der eine optimale Prozesskontrolle erforderlich ist, und durch die Silanisierungsreaktion erhebliche Mengen Alkohol freigesetzt werden, die aus der Mischung entweichen und so zu Problemen in der Abluft führen, wird dies bei der Verwendung der erfindungsgemäßen Füllstoffe vermieden.

### Beispiele:

Beispiele für die Herstellung eines erfindungsgemäßen Füllstoffs:

### Erfindungsgemäßer Füllstoff Beispiel A:

1500 g Ultrasil VN3 werden in einem Trommelmischer (4 Einbauten mit einer Höhe von 7 cm) eingefüllt. Die Trommel wird auf einem Rollstand bei einer Schräglage von 18° mit 20 Upm gedreht. Innerhalb von 55 min werden 120 g Si 69 (8 phf) mittels einer handelsüblichen Handsprühpumpe durch ein 6 cm-Loch im Trommeldeckel eingesprüht. Anschließend wird eine Nachlaufzeit der Trommel von 5 min eingehalten.

130 g der mit Si 69 vorbelegten Kieselsäure werden anschließend in den 600 ml-Einsatzbehälter eines Hochdruckextraktionsautoklaven, der auf 70°C vorgewärmt ist, gefüllt. Der Druck wird durch das Zupumpen von CO₂ langsam auf 150 bar erhöht. Nach 15 min Stehen wird die Temperatur durch die Mantelheizung des Autoklaven auf 100°C erhöht. Bei 100°C und 200 bar wird das System für eine Stunde konstant gehalten. Dann wird der Druck langsam auf 80 bar gesenkt. Bei 80 bar und 100°C wird für 25 min mit 1,2 kg CO₂ extrahiert. Abschließend wird bei 300 bar und 80°C mit 0,5 kg CO₂ für 30 min extrahiert.

Anschließend wird das System entspannt und der fertige Füllstoff entnommen.

### Erfindungsgemäßer Füllstoff Beispiel B:

2000 g Ultrasil VN3 werden 2h in einem Umluftschrank bei 105°C getrocknet. 1500 g des getrockneten Ultrasil VN3 werden in einem Trommelmischer (4 Einbauten mit einer Höhe von 7 cm) eingefüllt. Die Trommel wird auf einem Rollstand bei einer Schräglage von 18° mit 20 Upm gedreht. Innerhalb von 55 min werden 120 g Si 69 (8 phf) mittels einer handelsüblichen Handsprühpumpe durch ein 6 cm-Loch im Trommeldeckel eingesprüht. Anschließend wird eine Nachlaufzeit der Trommel von 5 min eingehalten.

130 g der mit Si 69 vorbelegten Kieselsäure werden anschließend in den 600 ml-Einsatzbehälter eines Hochdruckextraktionsautoklaven, der auf 70°C vorgewärmt ist, gefüllt. Der Druck wird durch das Zupumpen von CO₂ langsam auf 150 bar erhöht. Nach 15 min Stehen wird die Temperatur durch die Mantelheizung des Autoklaven auf 100°C erhöht. Bei 100°C und 200 bar wird das System für eine Stunde konstant gehalten. Dann wird der Druck langsam auf 80 bar gesenkt. Bei 80 bar und 100°C wird für 25 min mit 1,2 kg CO₂ extrahiert. Abschließend wird bei 300 bar und 80°C mit 0,5 kg CO₂ für 30 min extrahiert. Anschließend wird das System entspannt und der fertige Füllstoff entnommen.

### Erfindungsgemäßer Füllstoff Beispiel C:

In einen 15 l Stahl-Autoklaven mit magnetgekoppelten Hubrührer werden 1650 g des Pulvers einer Fällungskieselsäure Ultrasil VN3 und 132 g (8 phf) Si69 gegeben. Anschließend wird mit CO₂ und einer Mantelheizung ein Autoklaveninnendruck von 155 bar bei einer Temperatur von 90°C eingestellt. Die Mischung wird für 1 Stunde auf 90°C und 155 bar belassen. Anschließend wird die Probe auf Normaldruck entspannt und dabei abgekühlt. Es wird ein feinpulvriger, farbloser Füllstoff erhalten, der ohne besondere Aufarbeitung weiterverwendet werden kann.

In Anlehnung an die in Kautschuk, Gummi, Kunststoffe 51, (1998) 525 von Hunsche et al. beschriebenen Arbeitsvorschrift wird der auf dem Füllstoff befindliche Restalkohol (Ethanol) folgendermaßen bestimmt:
In einer Glasampulle, die nach dem Befüllen mit einer dicht schließenden Kappe versehen wird, werden 1 g des erfindungsgemäßen Füllstoffs mit 10 ml Diethylenglycolmonobutylether (DEGMBE) und 0,3 ml 0,5 mol H₂SO₄ versetzt. Die Mischung wird für 20 min bei 60°C in einem Wasserbad in der Glasampulle durchmischt. Anschließend wird zu der zügig auf 25°C temperierten Mischung 10 ml Decan zugegeben. Aus der organischen Phase werden dann entsprechende Mengen zur HPLC-Analyse (HPLC Gerät mit Jasco Autosampler 851-AS, Pumpe Jasco PU 980, RI-Detektor 7515A; TiO₂-Säule, 250x4,5 mm, 5 µm, YMC; mobile Phase: DEGMBE mit Cyclohexan; Temperatur 25°C) auf Ethanol entnommen.

So kann beispielsweise gezeigt werden, daß von ursprünglich 6 Äquivalenten Ethanol pro Molekül Si69 ([(C₂H₅)O]₃Si(CH₂)₃]₂S₄) in dem erfindungsgemäßen Füllstoff Beispiel C nur noch 0,71 Äquivalente Ethanol vorhanden sind. Das Silan hat an die Kieselsäureoberfläche unter Freisetzung von 5,29 Äquivalenten Ethanol und unter Ausbildung von Si-O-Si-Bindungen an die Kieselsäureoberfläche angebunden.
Die analytischen Werte der erfindungsgemäßen Füllstoffe sind in Tabelle 1 dargestellt.

Die Stampfdichte wird nach DIN EN 787-11 bestimmt.

Die Proben werden für 15-20 h bei 105°C getrocknet und die BET-Oberfläche gemäß DIN 66131 (volumetrisches Verfahren) bestimmt.

Die Proben werden für 15-20 h bei 105°C getrocknet und die Mesoporenverteilung nach der BJH-Methode in Anlehnung an DIN 66134 bestimmt.

Das Makroporenvolumen (Poren mit Weiten > 30 bzw. > 50 nm) werden mit einem Quecksilberporosimeter Autopore II 9220 (Fa. Micromeritics) gemäß den allgemein bekannten Regeln und Bedienvorschriften im Bereich bis 400 µm bestimmt. Die Proben werden zuvor für 15-20 h bei 105°C getrocknet. Das Verfahren dient der Bestimmung des Porenvolumens und der Porenverteilung poröser Feststoffe durch Messung des unter steigendem Druck eingepressten Quecksilbervolumens nach dem Verfahren von Ritter und Drake gemäß DIN 66133.

Die Porenmaxima für Meso- und Makroporen können direkt aus den entsprechenden Diagrammen (kumuliertes Intrusionsvolumen (ml/g) bzw. log. differentielles Porenvolumen dV/dlog D) für die Porenvolumenverteilung (ml/g) in Abhängigkeit vom Porendurchmesser (µm) abgelesen werden.

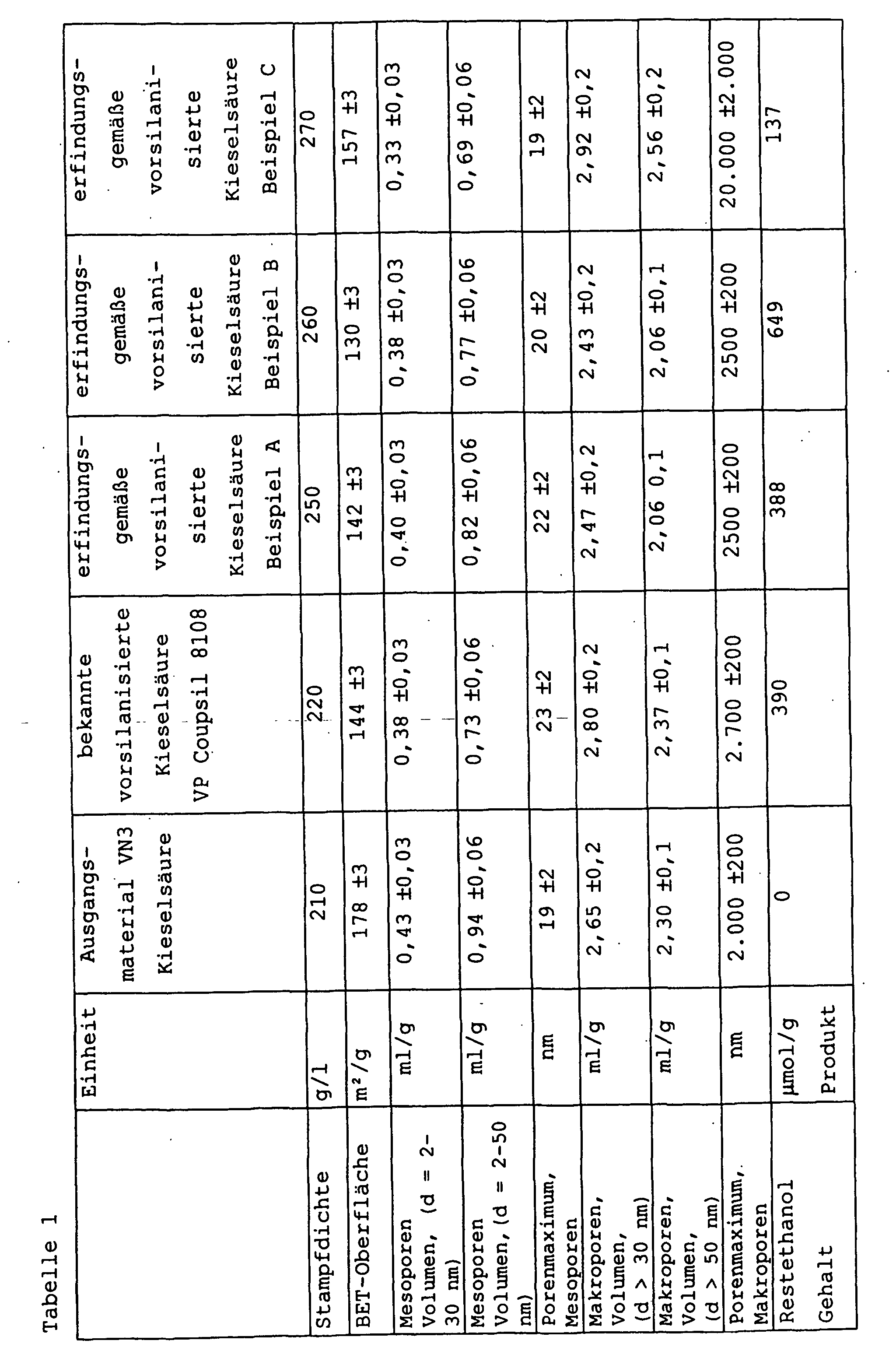

Das Kopplungsreagenz Si 69 ist ein Bis-(triethoxysilylpropyl)tetrasulfan der Degussa AG. Ultrasil VN3 ist eine gefällte Kieselsäure der Degussa AG mit einer BET Oberfläche von 170 m²/g. Die vorsilanisierte Kieselsäure VP Coupsil 8108 ist von der Degussa AG als Versuchsprodukt erhältlich. Dabei handelt es sich um eine dem Ultrasil 7000 GR vergleichbare Kieselsäure mit einer BET-Oberfläche von 175 m²/g, die mit 8 % Si 69 vorsilanisiert wird.

### Kautschukmischungen

Die für die Kautschukmischungen verwendete Rezeptur ist in der folgenden Tabelle 2 angegeben. Dabei bedeutet die Einheit phr Gewichtsanteile, bezogen auf 100 Teile des eingesetzten Rohkautschuks. Das allgemeine Verfahren zur Herstellung von Kautschukmischungen und deren Vulkanisate ist in dem folgenden Buch beschrieben: "Rubber Technology Handbook", W. Hofmann, Hanser Verlag 1994.

**Tabelle 2**

| Substanz | Mischung A/C In-situ Referenz | Mischung B | Mischung D Referenz |
|---|---|---|---|
| | [phr] | [phr] | [phr] |
| **1. Stufe** | | | |
| Buna VSL 5025-1 | 96 | 96 | 96 |
| Buna CB 24 | 30 | 30 | 30 |
| Ultrasil 7000 GR | 80 | -- | -- |
| Erfindungsgemäße vorsilanisierte Kieselsäure Beispiel C | -- | 83 | -- |
| VP Coupsil 8108 | -- | -- | 83 |
| ZnO | 3 | 3 | 3 |
| Stearinsäure | 2 | 2 | 2 |
| Naftolen ZD | 10 | 10 | 10 |
| Vulkanox 4020 | 1,5 | 1.5 | 1,5 |
| Protector G35P | 1 | 1 | 1 |
| Si 69 | 6,4 | -- | -- |

| **2. Stufe** | | | |
|---|---|---|---|
| Batch Stufe 1 | | | |

| **3. Stufe** | | | |
|---|---|---|---|
| Batch Stufe 2 | | | |
| Vulkacit D | 2 | 2 | 2 |
| Vulkacit CZ | 1,5 | 1,5 | 1,5 |
| Schwefel | 1,5 | 1,5 | 1,5 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100°C) von 50 ±4 auf.

Bei dem Polymer Buna CB 24 handelt es sich um ein cis 1,4-Polybutadien (Neodymtyp) der Bayer AG mit cis 1,4-Gehalt von 97 %, einem trans 1,4-Gehalt von 2 %, einem 1,2-Gehalt von 1 % und einer Mooney-Viskosität von 44 ±5.

Als aromatisches Öl wird Naftolen ZD der Chemetall verwendet. Bei Vulkanox 4020 handelt es sich um 6PPD der Bayer AG und Protektor G35P ist ein Ozonschutzwachs der HB-Fuller GmbH. Vulkacit D (DPG) und Vulkacit CZ (CBS) sind Handelsprodukte der Bayer AG.

Ultrasil 7000 GR ist eine leicht dispergierbare gefällte Kieselsäure der Degussa AG mit einer BET Oberfläche von 175 m²/g.

Die Kautschukmischungen werden in einem Innenmischer entsprechend der Mischvorschrift in Tabelle 3 hergestellt.

**Tabelle 3**

| Stufe 1 | | |
|---|---|---|
| Einstellungen | | |
| Mischaggregat | | Werner & Pfleiderer E-Typ |
| Drehzahl | | 60 min⁻¹ |
| Stempeldruck | | 5,5 bar |
| Leervolumen | | 1,58 L |
| Füllgrad | | 0,56 |
| Durchflußtemp. | | 70 °C |

| Mischvorgang | | |
|---|---|---|
| 0 bis | 1 | Buna VSL 5025-1 + Buna CB 24 |
| 1 bis | 3 | 1/2 Kieselsäure bzw. vorsilanisierte |
| | | Kieselsäure, ZnO, Stearinsäure, Naftolen ZD |
| 3 bis | 4 | 1/2 Kieselsäure bzw.vorsilanisierte |
| | | Kieselsäure, Alterungsschutz |
| | 4 | Säubern |
| 4 bis | 5 | Mischen |
| | 5 | Säubern |
| 5 bis | 6 | Mischen und ausfahren |
| Batch-Temp. | | 145-150°C |
| Lagerung | | 24 h bei Raumtemperatur |

| Stufe 2 | | |
|---|---|---|
| Einstellungen | | |
| Mischaggregat | | Wie in Stufe 1 bis auf: |
| Drehzahl | | 70 min⁻¹ |
| Durchflußtemp. | | 70 °C |
| Füllgrad | | 0,53 |

| Mischvorgang | | |
|---|---|---|
| 0 bis | 2 | Batch Stufe 1 aufbrechen |
| 2 bis | 5 | Batchtemperatur 150°C durch |
| | 5 | Ausfahren |
| Batch-Temp. | | 150°C |
| Lagerung | | 4 h bei Raumtemperatur |

| Stufe 3 | | |
|---|---|---|
| Einstellungen | | |
| Mischaggregat | | wie in Stufe 1 bis auf |
| Drehzahl | | 40 min⁻¹ |
| Füllgrad | | 0,50 |
| Durchflußtemp. | | 50 °C |

| Mischvorgang | | |
|---|---|---|
| 0 bis | 2 | Batch Stufe 2, Beschleuniger, Schwefel |
| | 2 | ausfahren und auf Labormischwalzwerk Fell |
| | | (Durchmesser 200 mm, Länge 450 mm, |
| | | Durchflußtemperatur 50°C) |
| | | Homogenisieren: |
| | | 3* links, 3* rechts einschneiden und |
| | | 8* bei engem Walzenspalt (1 mm) und |
| | | 3* bei weitem Walzenspalt (3,5 mm) |
| | | Fell ausziehen. |
| Batch-Temp. | | 85-95°C |

In Tabelle 4 sind die Methoden für die Gummitestung zusammengestellt.

**Tabelle 4**

| Physikalische Testung | Norm/ Bedingungen |
|---|---|
| ML 1+4, 100°C, 3. Stufe | DIN 53523/3, ISO 667 |
| Vulkameterprüfung, 165°C | DIN 53529/3, ISO 6502 |
| Dmax - Dmin [dNm] | |
| t10% und t90% [min] | |
| Zugversuch am Ring, 23°C | DIN 53504, ISO 37 |
| Zugfestigkeit [MPa] | |
| Spannungswerte [MPa] | |
| Bruchdehnung [%] | |
| Shore-A-Härte, 23°C [SH] | DIN 53 505 |
| Viskoelastische Eigenschaften, | DIN 53 513, ISO 2856 |
| 0 und 60°C, 16 Hz, 50 N Vorkraft und 25 N Amplitudenkraft Dynamischer Modul E* [MPa] Verlustfaktor tan δ[] | |
| Ball Rebound, 23°C, 60°C [%] | ASTM D 5308 |
| DIN-Abrieb, 10 N Kraft [mm³] | DIN 53 516 |

### Beispiel 1

In Beispiel 1 wird die in-situ gemischte Referenzmischung (A) mit 6,4 phr des Kopplungsreagenzes Si 69 gegen die Mischung (B) mit der erfindungsgemäßen silanmodifizierten Kieselsäure verglichen. Die verwendeten Rezepturen für die Mischungen (A) und (B) sind in der Tabelle 2 aufgeführt, und die verwendete Mischvorschrift ist in Tabelle 3 gezeigt. Die Ergebnisse der gummitechnischen Prüfung sind in Tabelle 5 zusammengestellt.

**Tabelle 5:**

| Ergebnisse Beispiel 1 | | | |
|---|---|---|---|
| **Mischung** | | **(A)** | **(B)** |
| ML (1+4) | [ME] | 63 | 67 |
| Dmax-Dmin | [dNm] | 16,6 | 18,4 |
| t10% | [min] | 1,8 | 1,3 |
| t90% | [min] | 28,2 | 31,7 |
| Shore-A-Härte | [SH] | 63 | 61 |
| Zugfestigkeit | [MPa] | 15,5 | 15,9 |
| Spannungswert 100% | [MPa] | 1,6 | 1,7 |
| Spannungswert 300% | [MPa] | 7,8 | 8,4 |
| RF 300%/100% | [ ] | 4,9 | 4,9 |
| Bruchdehung | [%] | 450 | 440 |
| DIN-Abrieb | [mm³] | 77 | 82 |
| Ball-Rebound, 60°C | [%] | 59 | 62 |
| E* (0°C) | [MPa] | 14,3 | 14,1 |
| tanδ (0°C) | [ ] | 0,483 | 0,461 |
| E* (60°C) | [MPa] | 6,4 | 6,4 |
| tanδ (60°C) | [ ] | 0,146 | 0,144 |

Wie man anhand der Daten in Tabelle 5 sieht, liegen die Viskositäten ML (1+4) der Mischungen (A) und (B) auf vergleichbarem Niveau und auch die Vulkanisationscharakteristika sind ähnlich. Die statischen und dynamischen Gummidaten sind im Rahmen der üblichen Schwankungen von Gummitestungen ebenfalls vergleichbar. Der für die Mischungen (A) und (B) identische Wert für den Verstärkungsfaktor RF 300%/100% zeigt eine gleich hohe Kieselsäure-Silan-Anbindung. Dies zeigt eindeutig, daß die Verwendung der erfindungsgemäßen Kieselsäure zu einem Gummiwertebild führt, daß mit dem der in-situ Referenz vergleichbar ist.

### Beispiel 2

Beispiel 2 zeigt, daß gegenüber der in-situ Referenzmischung (C) das gummitechnische Eigenschaftsbild bei der Verwendung der handelsüblichen vorsilanisierten Kieselsäure VP Coupsil 8108 (D) abfällt. Die Mischungen (C) und (D) basieren auf der in Tabelle 2 gezeigten Rezepturen. In Abänderung zu der in Beispiel 1 verwendeten und in Tabelle 2 angegebenen Mischvorschrift wird in diesem Beispiel die 1. Mischstufe mit einer Drehzahl von 70 min⁻¹ bei einer Durchflußtemperatur von 70°C und die 2. Mischstufe mit einer Anfangsdrehzahl von 80 min⁻¹ bei einer Durchflußtemperatur von 80°C gemischt. Die Ergebnisse sind in Tabelle 6 zusammengestellt.

**Tabelle 6:**

| Ergebnisse Beispiel 2 | | | |
|---|---|---|---|
| **Mischung** | | **(C)** | **(D)** |
| ML (1+4) | [ME] | 60 | 82 |
| Dmax-Dmin | [dNm] | 18,9 | 22,1 |
| t10% | [min] | 1,6 | 1,1 |
| t90% | [min] | 23,2 | 36,0 |
| Shore-A-Härte | [SH] | 62 | 69 |
| Zugfestigkeit | [MPa] | 13,0 | 13,0 |
| Spannungswert 100% | [MPa] | 1,9 | 2,3 |
| Spannungswert 300% | [MPa] | 8,9 | 9,1 |
| RF 300%/100% | [ ] | 4,7 | 4,0 |
| Bruchdehung | [%] | 380 | 380 |
| DIN-Abrieb | [mm³] | 91 | 88 |
| Ball-Rebound, 23°C | [%] | 32 | 33 |
| E* (0°C) | [MPa] | 15,4 | 20,5 |
| tanδ (0°C) | [ ] | 0,486 | 0,502 |
| E* (60°C) | [MPa] | 6,5 | 7,7 |
| tanδ (60°C) | [ ] | 0,138 | 0,144 |

Die Werte aus Tabelle 6 zeigen, daß mit der Verwendung der bekannten, vorsilanisierten Kieselsäure VP Coupsil 8108 nicht das hohe Niveau der in-situ Referenzmischung erreicht wird. Sowohl die höhere Mooney-Viskosität, die höhere Shore-A-Härte und die höheren dynamischen Moduli E* zeigen eine ungenügend homogene Silanisierung an, die zu einem höheren Füllstoffnetzwerk von Mischung (D) führt. Zudem fällt der Verstärkungsfaktor RF 300%/100% der Mischung (D) gegenüber der Referenz (C) deutlich ab.

Der Vorteil der Verwendung der erfindungsgemäßen Kieselsäuren liegt darin, daß entgegen der bekannterweise verwendeten in-situ Silanisierung nach dem Stand der Technik mit flüssigen Silanen, wie zum Beispiel Si 69, während des Mischprozesses keine chemische Reaktion durchgeführt werden muss, bei der eine optimale Prozesskontrolle erforderlich ist. Zudem werden bei der bekannten in-situ Silanisierung nachteiligerweise erhebliche Mengen Alkohol freigesetzt, die aus der Mischung entweichen und so zu Problemen in der Abluft führen.

Die Beispiele zeigen eindeutig, daß mit der Verwendung der erfindungsgemäßen vorsilanisierten Kieselsäuren im Gummi eine dem Stand der Technik vergleichbares Eigenschaftsbild erreicht wird, ohne die oben genannten Nachteile, wie sie bei der bekannten in-situ Silanisierung auftreten, zu bewirken. Im Gegensatz dazu wird mit der Verwendung von handelsüblichen vorsilanisierten Kieselsäuren, wie zum Beispiel VP Coupsil 8108 zwar das Problem der Ethanolentwicklung beim Mischen vermieden, das hohe gummitechnische Niveau der in-situ Referenz jedoch nicht erreicht.

## Patentansprüche

1. Silanmodifizierter biopolymerer, biooligomerer, oxidischer oder silikatischer Füllstoff erhältlich, indem man mindestens einen biopolymeren, biooligomeren, oxidischen oder silikatischen Füllstoff in einem verdichteten Gas mit mindestens einem Silan umsetzt.

2. Silanmodifizierter biopolymerer, biooligomerer, oxidischer oder silikatischer Füllstoff nach Anspruch 1, **dadurch gekennzeichnet, daß** dieser zwischen 0,1 und 50,0 Gew.-% Silan enthält.

3. Verfahren zur Herstellung von silanmodifiziertem biopolymerem, biooligomerem, oxidischem oder silikatischem Füllstoff nach Anspruch 1, **dadurch gekennzeichnet, daß** man mindestens ein biopolymeren, biooligomeren, oxidischen oder silikatischen Füllstoff in einem verdichteten Gas mit mindestens einem Silan umsetzt.

4. Verfahren zur Herstellung eines silanmodifizierten biopolymerem, biooligomerem, oxidischem oder silikatischem Füllstoff nach Anspruch 3, **dadurch gekennzeichnet, daß** der Druck während der Modifizierungsreaktion zwischen 1 und 500 bar beträgt.

5. Verfahren zur Herstellung von silanmodifiziertem biopolymerem, biooligomerem, oxidischem oder silikatischem Füllstoff nach Anspruch 3, **dadurch gekennzeichnet, daß** die Temperatur zwischen 0 und 300°C beträgt.

6. Verfahren zur Herstellung von silanmodifiziertem biopolymerem, biooligomerem, oxidischem oder silikatischem Füllstoff nach Anspruch 3, **dadurch gekennzeichnet, daß** die verwendeten Silane in dem verdichteten Gas ungelöst, teilweise oder auch vollständig gelöst sind.

7. Verfahren zur Herstellung von silanmodifiziertem biopolymerem, biooligomerem, oxidischem oder silikatischem Füllstoff nach Anspruch 3, **dadurch gekennzeichnet, daß** der Druck während der Behandlung auf unterschiedlichen Druckniveaus für Zeiträume von 5 - 720 min konstant gehalten wird und der Füllstoff während dieser Zeit in dem verdichteten Gas eintaucht, von diesem durchflossen oder in diesem gerührt wird.

8. Verfahren zur Herstellung von silanmodifiziertem biopolymerem, biooligomerem, oxidischem oder silikatischem Füllstoff nach Anspruch 3, **dadurch gekennzeichnet, daß** der biopolymere, biooligomere, oxidische oder silikatische Füllstoff und das Silan kontinuierlich mit einem geeigneten Rühraggregat umgewälzt werden.

9. Verfahren zur Herstellung von silanmodifiziertem biopolymerem, biooligomerem, oxidischem oder silikatischem Füllstoff nach Anspruch 3, **dadurch gekennzeichnet, daß** als Rühraggregat Hubrührer, Blattrührer, Balkenrührer, Lochbalkenrührer, Kreuzbalkenrührer, Ankerrührer, Gitterrührer, Schaufelwalze, Propellerrührer, Schneckenrührer, Turbinenrührer, Scheibenrührer, Planetenrührer, Kreiselmischer oder Impellerrührer verwendet werden.

10. Verfahren zur Herstellung von silanmodifiziertem biopolymerem, biooligomerem, oxidischem oder silikatischem Füllstoff nach Anspruch 3, **dadurch gekennzeichnet, daß** der biopolymere, biooligomere, oxidische oder silikatische Füllstoff und das Silan zuerst durchmischt, beziehungsweise in Kontakt gebracht und dann mit dem im verdichteten Zustand vorliegenden Gas gemischt werden.

11. Verfahren zur Herstellung von silanmodifiziertem biopolymerem, biooligomerem, oxidischem oder silikatischem Füllstoff nach Anspruch 3, **dadurch gekennzeichnet, daß** der biopolymere, biooligomere, oxidische oder silikatische Füllstoff erst mit dem im verdichteten Zustand vorliegenden Gas durchmischt, beziehungsweise in Kontakt gebracht und erst dann mit dem Silan gemischt wird.

12. Verfahren zur Herstellung von silanmodifiziertem biopolymerem, biooligomerem, oxidischem oder silikatischem Füllstoff nach Anspruch 3, **dadurch gekennzeichnet, daß** das Silan, erst mit dem im verdichteten Zustand vorliegenden Gas durchmischt, beziehungsweise in Kontakt gebracht und erst dann mit dem entsprechenden biopolymeren, biooligomeren, oxidischen oder silikatischen Füllstoff gemischt wird.

13. Verfahren zur Herstellung von silanmodifiziertem biopolymerem, biooligomerem, oxidischem oder silikatischem Füllstoff nach Anspruch 3, **dadurch gekennzeichnet, daß** der Herstellungsprozess im Anschluß an die Oberflächenmodifizierung des silanmodifizierten biopolymeren, biooligomeren, oxidischen oder silikatischen Füllstoffs eine Evakuierungs- oder Druckentspannungsstufe mit Abtrennung des verdichteten Gases vom Endprodukt umfasst.

14. Verfahren zur Herstellung von silanmodifiziertem biopolymerem, biooligomerem, oxidischem oder silikatischem Füllstoff nach Anspruch 3, **dadurch gekennzeichnet, daß** die Evakuierungs- oder Druckentspannungsstufe in weniger als 10 min durchgeführt wird.

15. Verfahren zur Herstellung von silanmodifiziertem biopolymerem, biooligomerem, oxidischem oder silikatischem Füllstoff nach Anspruch 3, **dadurch gekennzeichnet, daß** die Evakuierungs- oder Entspannungsstufe in einer Zeit zwischen 10 min und 180 min durchgeführt wird.

16. Verfahren zur Herstellung von silanmodifiziertem biopolymerem, biooligomerem, oxidischem oder silikatischem Füllstoff nach Anspruch 3, **dadurch gekennzeichnet, daß** die Evakuierungs- oder Entspannungsstufe bei Temperaturen zwischen 1 und 300°C durchgeführt wird.

17. Verfahren zur Herstellung von silanmodifiziertem biopolymerem, biooligomerem, oxidischem oder silikatischem Füllstoff nach Anspruch 3, **dadurch gekennzeichnet, daß** man als Silan eine Organosiliziumverbindung der allgemeinen Formel (I)
Z-A-Sₓ-A-Z (I)
verwendet, in der
x eine Zahl von 1 bis 12 ist,
Z gleich SiX¹X²X³ ist und
X¹, X², X³ jeweils unabhängig voneinander bedeuten können Wasserstoff (-H),
Halogen oder Hydroxy (-OH),
ein Alkyl-,
Alkenylsäuresubstituent oder
ein substituierter Alkyl-, beziehungsweise Alkenylsäuresubstituent,
eine lineare oder verzweigte Kohlenwasserstoffkette mit 1-6 Kohlenstoffatomen,
ein Cycloalkanrest mit 5-12 Kohlenstoffatomen,
ein Benzylrest oder
ein halogen- oder alkylsubstituierter Phenylrest,
Alkoxygruppen mit linearen oder verzweigten Kohlenwasserstoffketten mit (C₁₋₆) Atomen,
eine Cycloalkoxygruppe mit (C₅₋₁₂)-Atomen,
eine halogen- oder alkylsubstituierte Phenoxygruppe oder eine Benzyloxygruppe,
A eine (C₁-C₁₆) verzweigte oder unverzweigte, gesättigte oder ungesättigte, aliphatische, aromatische oder gemischt aliphatische/aromatische zweibindige Kohlenwasserstoffgruppe ist.

18. Verfahren zur Herstellung von silanmodifiziertem biopolymerem, biooligomerem, oxidischem oder silikatischem Füllstoff nach Anspruch 17, **dadurch gekennzeichnet, daß** das Silan der Formel (I) [(EtO)₃Si(CH₂)₃]₂S, [(EtO)₃Si(CH₂)₃]₂S₂, [(EtO)₃Si(CH₂)₃]₂S₃, [(EtO)₃Si(CH₂)₃]₂S₄, [(EtO)₃Si(CH₂)₃]₂S₅, [(EtO)₃Si(CH₂)₃]₂S₆, [(EtO)₃Si(CH₂)₃]₂S₇, [(EtO)₃Si(CH₂)₃]₂S₈, [ (EtO)₃Si(CH₂)₃]₂S₉, [(EtO)₃Si(CH₂)₃]₂S₁₀, [(EtO)₃Si(CH₂)₃]₂S₁₁, [(EtO)₃Si(CH₂)₃]₂S₁₂,[(EtO)₃Si(CH₂)₃]₂S₁₃, [(EtO)₃Si(CH₂)₃]₂S₁₄ ist.

19. Verfahren zur Herstellung von silanmodifiziertem biopolymerem, biooligomerem, oxidischem oder silikatischem Füllstoff nach Anspruch 3, **dadurch gekennzeichnet, daß** man als Silan eine Organosiliziumverbindung der allgemeinen Formel (II)
X¹X²X³Si-A-S-SiR¹R²R³ (II)
verwendet, in der
X¹, X², X³ und A unabhängig voneinander dieselbe Bedeutung wie in Formel (I) haben,
R¹, R², R³ jeweils unabhängig voneinander sind und,
(C₁-C₁₆) Alkyl, (C₁-C₁₆) Alkoxy, (C₁-C₁₆) Haloalkyl, Aryl, (C₇-C₁₆) Aralkyl, H, Halogen oder X¹X²X³Si-A-S- bedeuten.

20. Verfahren zur Herstellung von silanmodifiziertem biopolymerem, biooligomerem, oxidischem oder silikatischem Füllstoff nach Anspruch 3, **dadurch gekennzeichnet, daß** man als Silan eine Organosiliziumverbindung der allgemeinen Formel (III)
X¹X²X³Si-Alk (III)
verwendet, in der
X¹, X², X³ jeweils unabhängig voneinander dieselbe Bedeutung wie in Formel (I) haben und
Alk ein geradkettiges, verzweigtes oder zyklisches (C₁-C₁₈)Alkyl, (C₁-C₅) Alkoxy, Halogen, Hydroxy, Nitril, Thiol, (C₁-C₄) Haloalkyl, -NO₂, (C₁-C₈) Thioalkyl, -NH₂, -NHR¹, -NR¹R², Alkenyl, Allyl-, Vinyl-, Aryl oder (C₇-C₁₆) Aralkyl ist.

21. Verfahren zur Herstellung von silanmodifiziertem biopolymerem, biooligomerem, oxidischem oder silikatischem Füllstoff nach Anspruch 20, **dadurch gekennzeichnet, daß** das Silan der Formel (III) (MeO)₃-Si-(CH₂)₃-H (EtO)₃-Si-(CH₂)₃-H, (MeO)₃-Si-C(CH₃)₃, (EtO)₃-Si-C(CH₃)₃, (MeO)₃-Si-(CH₂)₈-H, (EtO)₃-Si-(CH₂)₈-H, (MeO)₃-Si-(CH₂)₁₆-H, (EtO)₃-Si-(CH₂)₁₆-H, Me₃Si-OMe, Me₃Si-OEt, Me₃Si-Cl, Et₃Si-Cl, (MeO)₃Si-CH=CH₂, (EtO)₃Si-CH=CH₂, (Me₃Si)₂N-C(O)-H oder (Me₃Si)₂N-H entspricht.

22. Verfahren zur Herstellung von silanmodifiziertem biopolymerem, biooligomerem, oxidischem oder silikatischem Füllstoff nach Anspruch 3, **dadurch gekennzeichnet, daß** man als Silan eine Organosiliziumverbindung der allgemeinen Formel (IV) oder (V)
[[(ROC(=O))ₚ-(G)ⱼ]ₖ-Y-S]ᵣ-G-(SiX¹X²X³)ₛ (IV)
[(X¹X²X³Si)_{q}-G]ₐ-[Y- [S-G-SiX¹X²X³]_{b}]_{c} (V)
verwendet,
in der Y eine polyvalente Spezies (Q)_{z}D(=E) darstellt, wobei folgendes gilt:
p ist 0 bis 5, r ist 1 bis 3, z ist 0 bis 2; q ist 0 bis 6, a ist 0 bis 7, b ist 1 bis 3, j ist 0 bis 1, aber es kann, wenn p = 1 auch häufig 0 sein, c ist 1 bis 6, bevorzugt 1 bis 4, t ist 0 bis 5, s ist 1 bis 3, k ist 1 bis 2, unter der Vorraussetzung, daß
(1) falls (D) ein Kohlenstoff, Schwefel oder Sulfonyl ist, gilt, daß a + b = 2 und k = 1,
(2) falls (D) ein Phosphoratom ist, gilt, daß a + b = 3 solange c ≥ 1 und b = 1, wobei a = c + 1,
(3) falls (D) ein Phosphoratom ist, gilt, daß k = 2, ist, Y eine polyvalente Spezies (Q)_{z}D(=E) darstellt, bevorzugt -C(=NR)-, -SC(=NR)-, -SC(=O)-, (-NR)C(=O)-, (-NR)C(=S)-, -OC(=O)-, -OC(=S)-, -C(=O)-, -SC(=S)-, -C(=S)-, -S(=O)-, -S(=O)₂-, -OS(=O)₂-, (-NR)S(=O)₂-, -SS(=O)-, -OS(=O)-, (NR)S(=O)-, -SS(=O)₂-, (-S)₂P(=O)-, -(-S)P(=O)-, -P(=O)(-)₂, (-S)₂P(=S)-, -(-S)P(=S)-, -P(=S)(-)₂, (-NR)₂P(=O)-, (-NR) (-S)P(=O)-, (-O) (-NR)P(=O)-, (-O) (-S)P(=O)-, (-O)₂P(=O)-; -(-O)P(=O)-, -(-NR)P(=O)-, (-NR)₂P(=S)-, (-NR) (-S)P(=S)-, (-O) (-NR)P(=S)-, (-O)(-S)P(=S)-, (-O)₂P(=S)-, -(-O)P(=S)-, oder - (-NR)P(=S) -,
in jeder dieser Gruppen ist das Atom (D) doppelt mit dem Heteroatom (E) verbunden, das wiederum mit dem Schwefelatom (S) verbunden ist, welches mittels einer Gruppe (G) mit dem Siliziumatom (Si) verknüpft ist,
R¹ unabhängig voneinander H, eine gerade, zyklische oder verzweigte Alkylkette bedeuten, gegebenenfalls Alkylketten die ungesättigte Anteile wie Doppelbindungen (Alkene), Dreifachbindungen (Alkine) oder auch Alkylaromaten (Aralkyl) oder Aromaten beinhalten und die die gleichen Bedeutungen in Gleichung (II) aufweisen,
G unabhängig von den übrigen Substituenten, Wasserstoff, eine gerade, zyklische oder verzweigte Alkylkette mit (C₁-C₁₈) bedeuten, gegebenenfalls können die Alkylketten einen ungesättigten Anteil, wie Doppelbindungen (Alkene), Dreifachbindungen (Alkine) oder auch Alkylaromaten (Aralkyl) oder Aromaten beinhalten,
wenn p = 0 in Formel ist, ist G vorzugsweise Wasserstoff (H),
G entspricht nicht der Struktur eines α, β-ungesättigten Fragments, welches mit dem Y -Fragment in der Weise verbunden ist, daß ein α, β-ungesättigtes Thiocarbonylfragment entsteht,
X¹, X² und X³ jeweils unabhängig voneinander die Bedeutung wie in Formel (I) besitzen.

23. Verfahren zur Herstellung von silanmodifiziertem biopolymerem, biooligomerem, oxidischem oder silikatischem Füllstoff nach Anspruch 3, **dadurch gekennzeichnet, daß** man als Silan eine Organosiliziumverbindung der allgemeinen Formel (VI)
X¹X²X³Si-A-Sub (VI)
verwendet, wobei X¹, X², X³ und A, jeweils unabhängig voneinander, die Bedeutung gemäß Formel (I) haben und Sub -SH, -Cl, -Br, -I, -NH₂, -NH(A-SiX¹X²X³), -N(A-SiX¹X²X³)₂, -NH-CH₂-CH₂-NH₂, NH-CH₂-CH₂-NH-CH₂-CH₂-NH₂, NHEt, NEt₂, NH(C₄H₉), O-C(O)-CMe=CH₂, O-CH₂- (CH-O-CH₂) oder -SCN ist.

24. Verfahren zur Herstellung von silanmodifiziertem biopolymerem, biooligomerem, oxidischem oder silikalitischem Füllstoff nach Anspruch 23, **dadurch gekennzeichnet, daß** das Silan der Formel (VI) (MeO)₃Si-(CH₂)₃-SH, (EtO)₃Si-(CH₂)₃-SH, (C₃H₇O)₃Si-(CH₂)₃-SH, (MeO)₃Si-(CH₂)₃-Cl, (EtO)₃Si-(CH₂)₃-Cl, (C₃H₇O)₃Si-(CH₂)₃-Cl, [(MeO)₃Si-(CH₂)₃-]₂NH, [(EtO)₃Si-(CH₂)₃-]₂NH, [(C₃H₇O)₃Si-(CH₂)₃-]₂NH, (MeO)₃Si-(CH₂)₃-NH₂, (EtO)₃Si-(CH₂)₃-NH₂, (C₃H₇O)₃Si-(CH₂)₃-NH₂, (MeO)₃Si-(CH₂)₃-NH-(CH₂)₂-NH₂, (EtO)₃Si-(CH₂)₃-NH-(CH₂)₂-NH₂, (C₃H₇O)₃Si-(CH₂)₃-NH-(CH₂)₂-NH₂, (MeO)₃Si-(CH₂)₃-O-C(O)-CMe=CH₂, (EtO)₃Si-(CH₂)₃-O-C(O)-CMe=CH₂, (C₃H₇O)₃Si-(CH₂)₃-O-C(O)-CMe=CH₂, (MeO)₃Si-(CH₂)₃-O-CH₂-(CH-O-CH₂), (EtO)₃Si-(CH₂)₃-O-CH₂-(CH-O-CH₂), (C₃H₇O)₃Si-(CH₂)₃-O-CH₂-(CH-O-CH₂), MeO)₃Si-(CH₂)₃-SCN, (EtO)₃Si-(CH₂)₃-SCN oder (C₃H₇O)₃Si-(CH₂)₃-SCN entspricht.

25. Verfahren zur Herstellung von silanmodifiziertem biopolymerem, biooligomerem, oxidischem oder silikatischem Füllstoff nach Anspruch 3, **dadurch gekennzeichnet, daß** man Oligomere oder Cooligomere der Silane der Formeln I-VI verwendet.

26. Verfahren zur Herstellung von silanmodifiziertem biopolymerem, biooligomerem, oxidischem oder silikatischem Füllstoff nach Anspruch 3, **dadurch** gekenrtzeichnst, daß der biopolymere, biooligomere, oxidische oder silikatische Füllstoff ein natürlicher und/oder synthetischer Füllstoff ist.

27. Verfahren zur Herstellung von silanmodifiziertem biopolymerem, biooligomerem, oxidischem oder silikatischem Füllstoff nach Anspruch 3, **dadurch gekennzeichnet, daß** man als biopolymeren, biooligomeren, oxidischen oder silikatischen Füllstoff einen oder mehrere Stoffe aus der Gruppe Kaolin, Kieselgur, Mica, Diatomeenerden, Clay, Talkum, Wollastonit, Silikate unter anderem in Form von Glasfasern oder Glasgeweben, Zeolithe, Aluminiumoxid, Aluminiumhydroxid oder -trihydrat, Aluminiumsilikate, Silikate, gefällte oder pyrogene Kieselsäuren mit BET-Oberflächen (gemessen mit gasförmigem Stickstoff) von 1 bis 1000 m²/g, Zinkoxid, Boroxid, Magnesiumoxid, natürliche oder modifizierte Stärke, Cellulose, Amylose, Amylopectin, Celluloseacetat, Maltose, Cellobiose, Lactose, Saccharose, Raffinose, Glycogen, Pektinstoffe, Chitin, natürliche oder modifizierte Proteine oder Übergangsmetalloxide verwendet.

28. Verfahren zur Herstellung von silanmodifiziertem biopolymerem, biooligomerem, oxidischem oder silikatischem Füllstoff nach Anspruch 3, **dadurch gekennzeichnet, daß** als verdichtetes Gas Kohlendioxid, Helium, Stickstoff, Distickstoffmonoxid, Schwefelhexafluorid, gasförmige Alkane mit 1 bis 5 C-Atomen, gasförmige Alkene mit 2 bis 4 C-Atomen, gasförmige Alkine, gasförmige Diene, gasförmige Fluorkohlenwasserstoffe, Chlor und/oder Fluorchlorkohlenwasserstoffe oder deren Ersatzstoffe oder Ammoniak, sowie Gemische dieser Stoffe verwendet werden.

29. Verfahren zur Herstellung von silanmodifiziertem biopolymerem, biooligomerem, oxidischem oder silikatischem Füllstoff nach Anspruch 28, **dadurch gekennzeichnet, daß** das verdichtete Gas Kohlendioxid ist.

30. Kautschukmischungen, **dadurch gekennzeichnet, daß** sie Kautschuk, den erfindungsgemäßen silanmodifizierten biopolymeren, biooligomeren, oxidischen oder silikatischen Füllstoff nach Anspruch 1, gegebenenfalls gefällte Kieselsäure und/oder Ruß und/oder weitere Kautschukhilfsmittel enthalten.

31. Verwendung der Kautschukmischungen nach Anspruch 30 zur Herstellung von Formkörpern.

32. Verwendung der Kautschukmischungen nach Anspruch 31 zur Herstellung von Luftreifen für Personen- und Lastkraftwagen, Reifenlaufflächen für Personen- und Lastkraftwagen, Reifenbestandteilen für Personen- und Lastkraftwagen, Kabelmänteln, Schläuchen, Treibriemen, Förderbändern, Walzenbelägen, Fahrrad- und Motorradreifen und deren Bestanteilen, Schuhsolen, Dichtungsringen, Profilen und Dämpfungselementen.

## Claims

1. Silane-modified biopolymeric, biooligomeric, oxidic or siliceous filler obtainable by reacting at least one biopolymeric, biooligomeric, oxidic or siliceous filler in a compressed gas with at least one silane.

2. Silane-modified biopolymeric, biooligomeric, oxidic or siliceous filler according to claim 1, **characterised in that** it contains between 0.1 and 50.0 wt.% silane.

3. Process for the production of the silane-modified biopolymeric, biooligomeric, oxidic or siliceous filler according to claim 1, **characterised in that** at least one biopolymeric, biooligomeric, oxidic or siliceous filler is reacted in a compressed gas with at least one silane.

4. Process for the production of a silane-modified biopolymeric, biooligomeric, oxidic or siliceous filler according to claim 3, **characterised in that** the pressure during the modification reaction is between 1 and 500 bar.

5. Process for the production of the silane-modified biopolymeric, biooligomeric, oxidic or siliceous filler according to claim 3, **characterised in that** the temperature is between 0 and 300°C.

6. Process for the production of the silane-modified biopolymeric, biooligomeric, oxidic or siliceous filler according to claim 3, **characterised in that** the silanes used are undissolved, partially dissolved or wholly dissolved in the compressed gas.

7. Process for the production of the silane-modified biopolymeric, biooligomeric, oxidic or siliceous filler according to claim 3, **characterised in that** the pressure during treatment at various pressure levels is kept constant for periods of 5 to 720 min and during this time the filler is immersed in the compressed gas, stirred in it or the gas is passed through it.

8. Process for the production of the silane-modified biopolymeric, biooligomeric, oxidic or siliceous filler according to claim 3, **characterised in that** the biopolymeric, biooligomeric, oxidic or siliceous filler and the silane are continuously circulated with a suitable stirring device.

9. Process for the production of the silane-modified biopolymeric, biooligomeric, oxidic or siliceous filler according to claim 3, **characterised in that** a lifting agitator, blade agitator, straight-arm paddle agitator, perforated paddle agitator, cross-arm paddle agitator, anchor agitator, gate agitator, blade roll, propeller agitator, screw mixer, turbine agitator, disc agitator, planetary-type agitator, centrifugal mixer or impeller agitator is used as the stirring device.

10. Process for the production of the silane-modified biopolymeric, biooligomeric, oxidic or siliceous filler according to claim 3, **characterised in that** the biopolymeric, biooligomeric, oxidic or siliceous filler and the silane are first thoroughly mixed together or brought into contact and then mixed with the gas in the compressed state.

11. Process for the production of the silane-modified biopolymeric, biooligomeric, oxidic or siliceous filler according to claim 3, **characterised in that** the biopolymeric, biooligomeric, oxidic or siliceous filler is first thoroughly mixed or brought into contact with the gas in the compressed state and only then mixed with the silane.

12. Process for the production of the silane-modified biopolymeric, biooligomeric, oxidic or siliceous filler according to claim 3, **characterised in that** the silane is first thoroughly mixed or brought into contact with the gas in the compressed state and only then mixed with the corresponding biopolymeric, biooligomeric, oxidic or siliceous filler.

13. Process for the production of the silane-modified biopolymeric, biooligomeric, oxidic or siliceous filler according to claim 3, **characterised in that** the production process following the surface modification of the silane-modified biopolymeric, biooligomeric, oxidic or siliceous filler includes an evacuation or pressure release stage with separation of the compressed gas from the end product.

14. Process for the production of the silane-modified biopolymeric, biooligomeric, oxidic or siliceous filler according to claim 3, **characterised in that** the evacuation or pressure release stage is performed in less than 10 minutes.

15. Process for the production of the silane-modified biopolymeric, biooligomeric, oxidic or siliceous filler according to claim 3, **characterised in that** the evacuation or release stage is performed in a time of between 10 min and 180 min.

16. Process for the production of the silane-modified biopolymeric, biooligomeric, oxidic or siliceous filler according to claim 3, **characterised in that** the evacuation or release stage is performed at temperatures of between 1 and 300°C.

17. Process for the production of the silane-modified biopolymeric, biooligomeric, oxidic or siliceous filler according to claim 3, **characterised in that** an organosilicon compound having the general formula (I)
Z-A-Sₓ-A-Z (I)
is used as silane, in which
x is a number from 1 to 12,
Z is equal to SiX¹X²X³ and
X¹, X², X³ can each mutually independently denote hydrogen (-H),
halogen or hydroxy (-OH),
an alkyl,
alkenyl acid substituent or
a substituted alkyl or alkenyl acid substituent,
a linear or branched hydrocarbon chain with 1-6 carbon atoms,
a cycloalkyl radical with 5-12 carbon atoms,
a benzyl radical or
a halogen- or alkyl-substituted phenyl radical,
alkoxy groups with linear or branched
hydrocarbon chains with (C₁₋₆) atoms,
a cycloalkoxy group with (C₅₋₁₂) atoms,
a halogen- or alkyl-substituted phenoxy group or
a benzyloxy group,
A is a (C₁-C₁₆) branched or unbranched, saturated or unsaturated, aliphatic, aromatic or mixed aliphatic/aromatic divalent hydrocarbon group.

18. Process for the production of the silane-modified biopolymeric, biooligomeric, oxidic or siliceous filler according to claim 17, **characterised in that** the silane having formula (I) is [(EtO)₃Si(CH₂)₃]₂S, [(EtO)₃Si(CH₂)₃]₂S₂, [(EtO)₃Si(CH₂)₃]₂S₃, [(EtO)₃Si(CH₂)₃]₂S₄, [(EtO)₃Si(CH₂)₃]₂S₅, [(EtO)₃Si(CH₂)₃]₂S₆, [(EtO)₃Si(CH₂)₃]₂S₇, [(EtO)₃Si(CH₂)₃]₂S₈, [(EtO)₃Si(CH₂)₃]₂S₉, [(EtO)₃Si(CH₂)₃]₂S₁₀, [(EtO)₃Si(CH₂)₃]₂S₁₁, [(EtO)₃Si(CH₂)₃]₂S₁₂, [(EtO)₃Si(CH₂)₃]₂S₁₃, [(EtO)₃Si(CH₂)₃]₂S₁₄.

19. Process for the production of the silane-modified biopolymeric, biooligomeric, oxidic or siliceous filler according to claim 3, **characterised in that** an organosilicon compound having the general formula (II)
X¹X²X³Si-A-S-SiR¹R²R³ (II)
is used as silane, in which
X¹, X², X³ and A mutually independently have the same meaning as in formula (I),
R¹, R², R³ are each mutually independent and denote (C₁-C₁₆) alkyl, (C₁-C₁₆) alkoxy, (C₁-C₁₆) haloalkyl, aryl, (C₇-C₁₆) aralkyl, H, halogen or X¹X²X³Si-A-S-.

20. Process for the production of the silane-modified biopolymeric, biooligomeric, oxidic or siliceous filler according to claim 3, **characterised in that** an organosilicon compound having the general formula (III)
X¹X²X³Si-Alk (III)
is used as silane, in which
X¹, X², X³ each mutually independently have the same meaning as in formula (I) and
Alk is a straight-chain, branched or cyclic (C₁-C₁₈) alkyl,
(C₁-C₅) alkoxy, halogen, hydroxy, nitrile, thiol, (C₁-C₄) haloalkyl, -NO₂, (C₁-C₈) thioalkyl, -NH₂, -NHR¹, -NR¹R², alkenyl, allyl, vinyl, aryl or (C₇-C₁₆) aralkyl.

21. Process for the production of the silane-modified biopolymeric, biooligomeric, oxidic or siliceous filler according to claim 20, **characterised in that** the silane having formula (III) corresponds to (MeO)₃-Si-(CH₂)₃-H (EtO)₃-Si-(CH₂)₃-H, (MeO)₃-Si-C(CH₃)₃, (EtO)₃-Si-C(CH₃)₃, (MeO)₃-Si-(CH₂)₈-H, (EtO)₃-Si-(CH₂)₈-H, (MeO)₃-Si-(CH₂)₁₆-H, (EtO)₃-Si-(CH₂)₁₆-H, Me₃Si-OMe, Me₃Si-OEt, Me₃Si-Cl, Et₃Si-Cl, (MeO)₃Si-CH=CH₂, (EtO)₃Si-CH=CH₂, (Me₃Si)₂N-C(O)-H or (Me₃Si)₂N-H.

22. Process for the production of the silane-modified biopolymeric, biooligomeric, oxidic or siliceous filler according to claim 3, **characterised in that** an organosilicon compound having the general formula (IV) or (V)
[[(ROC(=O))ₚ-(G)ⱼ]ₖ-Y-S]ᵣ-G-(SiX¹X²X³)ₛ (IV)
[(X¹X²X³Si)_{q}-G]ₐ-[Y-[S-G-SiX¹X²X³]_{b}]_{c} (V)
is used as silane,
in which Y represents a polyvalent species (Q)_{z}D(=E), whereby the following applies:
p is 0 to 5, r is 1 to 3, z is 0 to 2; q is 0 to 6, a is 0 to 7, b is 1 to 3, j is 0 to 1, but if p = 1 it can also commonly be 0, c is 1 to 6, preferably 1 to 4, t is 0 to 5, s is 1 to 3, k is 1 to 2, on condition that
(1) if (D) is a carbon, sulfur or sulfonyl, a + b = 2 and k = 1,
(2) if (D) is a phosphorus atom, a + b = 3 as long as c ≥ 1 and b = 1, whereby a = c + 1,
(3) if (D) is a phosphorus atom, k = 2,
Y represents a polyvalent species (Q)_{z}D(=E), preferably -C(=NR)-, -SC (=NR) -, -SC (=O) -, (-NR) C (=O) -, (-NR)C(=S)-, -OC(=O)-, -OC(=S)-, -C (=O) -, -SC(=S)-, -C (=S) -, -S(=O)-, -S(=O)₂-, -OS(=O)₂-, (-NR)S(=O)₂-, -SS (=O) -, -OS(=O)-, (NR)S(=O)-, -SS(=O)₂-, (-S)₂P(=O)-, (-S)P(=O)-, -P(=O)(-)₂, (-S)₂P(=S)-, -(-S)P(=S)-, -P(=S)(-)₂, (-NR)₂P(=O)-, (-NR) (-S) P(=O) -, (-O)(-NR)P(=O)-, (-O)(-S)P(=O)-, (-O)₂P(=O)-, -(-O)P(=O)-, (-NR)P(=O)-, (-NR)₂P(=S)-, (-NR) (-S) P (=S) -, (-O) (-NR) P (=S) -, (-O)(-S)P(=S)-, (-O)₂P(=S)-, -(-O)P(=S)- or -(-NR)P(=S)-,
in each of these groups the atom (D) is doubly bonded to the hetero atom (E), which in turn is bonded to the sulfur atom (S), which is coupled to the silicon atom (Si) by means of a group (G),
R¹ mutually independently denotes H, a straight, cyclic or branched alkyl chain, optionally alkyl chains containing unsaturated components such as double bonds (alkenes), triple bonds (alkines) or alkyl aromatics (aralkyl) or aromatics and having the same meanings as in formula (II),
G independently of the other substituents denotes hydrogen, a straight, cyclic or branched alkyl chain with (C₁-C₁₈), the alkyl chains can optionally contain an unsaturated component, such as double bonds (alkenes), triple bonds (alkines) or alkyl aromatics (aralkyl) or aromatics,
if p = 0 in the formula, G is preferably hydrogen (H), G does not correspond to the structure of an α,β-unsaturated fragment which is bonded to the Y fragment in such a way that an α,β-unsaturated thiocarbonyl fragment is formed,
X¹, X² and X³ each mutually independently have the meaning as in formula (I).

23. Process for the production of the silane-modified biopolymeric, biooligomeric, oxidic or siliceous filler according to claim 3, **characterised in that** an organosilicon compound having the general formula (VI)
X¹X²X³Si-A-Sub (VI)
is used as silane, whereby X¹, X², X³ and A each mutually independently have the meaning according to formula (I) and Sub is -SH, -Cl, -Br, -I, -NH₂, -NH(A-SiX¹X²X³), -N(A-SiX¹X²X³)₂, -NH-CH₂-CH₂-NH₂, NH-CH₂-CH₂-NH-CH₂-CH₂-NH₂, NHEt, NEt₂, NH(C₄H₉), O-C(O)-CMe=CH₂, O-CH₂-(CH-O-CH₂) or -SCN.

24. Process for the production of the silane-modified biopolymeric, biooligomeric, oxidic or siliceous filler according to claim 23, **characterised in that** the silane having formula (VI) corresponds to (MeO)₃Si-(CH₂)₃-SH, (EtO)₃Si-(CH₂)₃-SH, (C₃H₇O)₃Si-(CH₂)₃-SH, (MeO)₃Si-(CH₂)₃-Cl, (EtO)₃Si-(CH₂)₃-Cl, (C₃H₇O)₃Si-(CH₂)₃-Cl, [(MeO)₃Si-(CH₂)₃-]₂NH, [(EtO)₃Si-(CH₂)₃-]₂NH, [(C₃H₇O)₃Si-(CH₂)₃-]₂NH, (MeO)₃Si-(CH₂)₃-NH₂, (EtO)₃Si-(CH₂)₃-NH₂, (C₃H₇O)₃Si-(CH₂)₃-NH₂, (MeO)₃Si-(CH₂)₃-NH-(CH₂)₂-NH₂, (EtO)₃Si-(CH₂)₃-NH-(CH₂)₂-NH₂, (C₃H₇O)₃Si-(CH₂)₃-NH-(CH₂)₂-NH₂, (MeO)₃Si-(CH₂)₃-O-C(O)-CMe=CH₂, (EtO)₃Si-(CH₂)₃-O-C(O)-CMe=CH₂, (C₃H₇O)₃Si-(CH₂)₃-O-C(O)-CMe=CH₂, (MeO)₃Si-(CH₂)₃-O-CH₂-(CH-O-CH₂), (EtO)₃Si-(CH₂)₃-O-CH₂-(CH-O-CH₂), (C₃H₇O)₃Si-(CH₂)₃-O-CH₂-(CH-O-CH₂), MeO)₃Si- (CH₂)₃-SCN, (EtO)₃Si- (CH₂)₃-SCN or (C₃H₇O)₃Si-(CH₂)₃-SCN.

25. Process for the production of the silane-modified biopolymeric, biooligomeric, oxidic or siliceous filler according to claim 3, **characterised in that** oligomers or co-oligomers of silanes having formulae I to VI are used.

26. Process for the production of the silane-modified biopolymeric, biooligomeric, oxidic or siliceous filler according to claim 3, **characterised in that** the biopolymeric, biooligomeric, oxidic or siliceous filler is a natural and/or synthetic filler.

27. Process for the production of the silane-modified biopolymeric, biooligomeric, oxidic or siliceous filler according to claim 3, **characterised in that** as biopolymeric, biooligomeric, oxidic or siliceous filler one or more substances are used from the group kaolin, kieselguhr, mica, diatomaceous earths, clay, talc, wollastonite, silicates inter alia in the form of glass fibres or glass fabrics, zeolites, aluminium oxide, aluminium hydroxide or trihydrate, aluminium silicates, silicates, precipitated or pyrogenic silicic acids with BET surface areas (measured with gaseous nitrogen) of 1 to 1000 m²/g, zinc oxide, boron oxide, magnesium oxide, natural or modified starch, cellulose, amylose, amylopectin, cellulose acetate, maltose, cellobiose, lactose, sucrose, raffinose, glycogen, pectins, chitin, natural or modified proteins or transition-metal oxides.

28. Process for the production of the silane-modified biopolymeric, biooligomeric, oxidic or siliceous filler according to claim 3, **characterised in that** carbon dioxide, helium, nitrogen, dinitrogen monoxide, sulfur hexafluoride, gaseous alkanes with 1 to 5 C atoms, gaseous alkenes with 2 to 4 C atoms, gaseous alkines, gaseous dienes, gaseous fluorocarbons, chlorinated hydrocarbons and/or chlorofluorocarbons or substitutes thereof or ammonia, and mixtures of these substances, are used as compressed gas.

29. Process for the production of the silane-modified biopolymeric, biooligomeric, oxidic or siliceous filler according to claim 28, **characterised in that** the compressed gas is carbon dioxide.

30. Rubber compounds, **characterised in that** they contain rubber, the silane-modified biopolymeric, biooligomeric, oxidic or siliceous filler according to the invention according to claim 1, optionally precipitated silicic acid and/or carbon black and/or other rubber auxiliary substances.

31. Use of the rubber compounds according to claim 30 for the production of moulded parts.

32. Use of the rubber compounds according to claim 31 for the production of pneumatic tyres for cars and lorries, tyre treads for cars and lorries, tyre components for cars and lorries, cable sheaths, tubes, drive belts, conveyor belts, roll coverings, bicycle and motorcycle tyres and components thereof, shoe soles, sealing rings, profiles and damping elements.

## Revendications

1. Charge biopolymère, biooligomère, de type oxyde ou silicate modifiée par un silane, obtenue en faisant réagir avec au moins un silane au moins une charge blopolymère, biooligomère, de type oxyde ou silicate, dans un gaz comprimé.

2. Charge biopolymère, biooligomère, de type oxyde ou silicate modifiée par un silane selon la revendication 1,
**caractérisé en ce qu'**
elle contient entre 0,1 et 50,0 % en poids de silane.

3. Procédé de production de charge biopolymère, biooligomère, de type oxyde ou silicate modifiée par un silane selon la revendication 1,
**caractérisé en ce qu'**
on fait réagir au moins une charge biopolymère, biooligomère, de type oxyde ou silicate dans un gaz comprimé avec au moins un silane.

4. Procédé de production d'une charge biopolymère, biooligomère, de type oxyde ou silicate modifiée par un silane selon la revendication 3,
**caractérisé en ce que**
la pression au cours de la réaction se situe entre 1 et 500 bars.

5. Procédé de production d'une charge biopolymère, biooligomère, de type oxyde ou silicate modifiée par un silane selon la revendication 3,
**caractérisé en ce que**
la température est comprise entre 0 et 300°C.

6. Procédé de production d'une charge biopolymère, biooligomère, de type oxyde ou silicate modifiée par un silane selon la revendication 3,
**caractérisé en ce que**
les silanes utilisé sont non dissous dans le gaz comprimé, ou encore partiellement ou entièrement dissous.

7. Procédé de production d'une charge biopolymère, biooligomère, de type oxyde ou silicate modifiée par un silane selon la revendication 3,
**caractérisé en ce que**
la pression au cours du traitement est maintenue constante à différents niveaux de pression pendant des intervalles allant de 5 à 720 minutes, et la charge au cours de ce temps est plongée dans le gaz comprimé, est traversée par lui ou y est agitée.

8. Procédé de production d'une charge biopolymère, biooligomère, de type oxyde ou silicate modifiée par un silane selon la revendication 3.
**caractérisé en ce que**
la charge biopolymère, biooligomère, de type oxyde ou silicate et le silane sont mis en rotation de façon continue avec un appareil d'agitation approprié.

9. Procédé de production d'une charge biopolymère, biooligomère, de type oxyde ou silicate modifiée par un silane selon la revendication 3,
**caractérisé en ce que**
comme appareil d'agitation on utilise un agitateur à moyeu, un agitateur à larnes, un agitateur à arbre, un agitateur à arbre troué, un agitateur à arbre en croix, un agitateur à ancre, un agitateur à grille, un agitateur à pales, un agitateur à rotor, un agitateur à vis, un agitateur à turbine, un agitateur à disque, un agitateur planétaire, un agitateur gyroscopique ou un agitateur à hélice.

10. Procédé de production d'une charge biopolymère, biooligomère, de type oxyde ou silicate modifiée par un silane selon la revendication 3,
**caractérisé en ce que**
la charge biopolymère, biooligomère, de type oxyde ou silicate et le silane sont tout d'abord mélangés à fond, respectivement mis en contact, puis mélangés avec le gaz présent à l'état comprimé.

11. Procédé de production d'une charge biopolymère, biooligomère, de type oxyde ou silicate modifiée par un silane selon la revendication 3,
**caractérisé en ce que**
la charge biopolymère, biooligomère, de type oxyde ou silicate et le silane est tout d'abord mélangée à fond avec le gaz présent à l'état comprimé, ou elle est mise en contact et ensuite mélangée avec le silane.

12. Procédé de production d'une charge biopolymère, biooligomère, de type oxyde ou silicate modifiée par un silane selon la revendication 3,
**caractérisé en ce qu'**
on mélange à fond tout d'abord le silane avec le gaz présent à l'état comprimé, ou on le met en contact et ensuite on le mélange avec la charge biopolymère blooligomère de type oxyde ou silicate correspondante.

13. Procédé de production d'une charge biopolymère, blooligomère, de type oxyde ou silicate modifiée par un silane selon la revendication 3,
**caractérisé en ce que**
le procédé de production comprend à la suite de la modification de surface de la charge biopolymère biooligomère de type oxyde ou silicate modifié par un silane une étape consistant à faire le vide ou à produire une détente avec séparation entre le gaz comprimé et le produit final.

14. Procédé de production d'une charge biopolymère, biooligomère, de type oxyde ou silicate modifiée par un silane selon la revendication 3,
**caractérisé en ce que**
l'étape consistant à faire le vide ou une détente est conduite en moins de 10 minutes.

15. Procédé de production d'une charge biopolymère, biooligomère, de type oxyde ou silicate modifiée par un silane selon la revendication 3,
**caractérisé en ce que**
l'étape consistant à faire le vide ou une détente est effectuée en un temps compris entre 10 minutes et 180 minutes.

16. Procédé de production d'une charge biopolymère, biooligomère, de type oxyde ou silicate modifiée par un silane selon la revendication 3,
**caractérisé en ce que**
l'étape consistant à faire le vide ou une détente est conduite à des températures comprises entre 1 et 300°C.

17. Procédé de production d'une charge biopolymère, biooligomère, de type oxyde ou silicate modifiée par un silane selon la revendication 3,
**caractérisé en ce qu'**
on utilise comme silane un composé d'organo-silicium de formule générale (I)
Z-A-Sₓ-A-Z (I)
dans laquelle
x représente un nombre allant de 1 à 12,
Z représente SiX¹X²X³ et
X¹, X², X³ peuvent représenter chacun indépendamment l'un de l'autre l'hydrogène (-H), un halogène ou un hydroxy (-OH),
un substituant alkyle, acide alcénylique, ou un substituant alkyle, respectivement acide alcénylique substitué,
une chaîne hydrocarbonée linéaire ou ramifiée comportant de 1 à 6 atomes de carbone,
un radical cycloalcane comportant de 5 à 12 atomes de carbone, un radical benzyle ou un radical phényle à substitution halogène ou alkyle,
des groupes alcoxy, avec des chaînes hydrocarbonées linéaires ou ramifiées comportant de 1 à 6 atomes de carbone, un groupe cycloalcoxy comportant de 5 à 12 atomes de carbone, un groupe phénoxy ou un groupe benzyloxy à substitution halogène ou alkyle,
A représente un groupe bivalent hydrocarboné ramifié ou non ramifié, saturé ou insaturé, aliphatique, aromatique ou aliphatique/aromatique mixte.

18. Procédé de production d'une charge biopolymère biooligomère de type oxyde ou silicate modifié par un silane selon la revendication 17,
**caractérisé en ce que**
le silane de formule (I) est [(EtO)₃Si(CH₂)₃]₂S, [(EtO)₃Si(CH₂)₃]₂S₂, [(EtO)₃Si(CH₂)₃]₂S₃, [(EtO)₃Si(CH₂)₃]₂S₄, [(EtO)₃Si(CH₂)₃]₂S₅, [(EtO)₃Si(CH₂)₃]₂S₆, [(EtO)₃Si(CH2)₃]₂S₇, [(EtO)₃Si(CH₂)₃]₂S₈, [(EtO)₃Si(CH₂)₃]₂S₉, [(EtO)₃Si(CH₂)₃]₂S₁₀, [(EtO)₃Si(CH₂)₃]₂S₁₁, [(EtO)₃Si(CH₂)₃]₂S₁₂, [(EtO)₃Si(CH₂)₃]₂S₁₃, [(EtO)₃Si(CH₂)₃]₂S₁₄.

19. Procédé de production d'une charge biopolymère biooligomère de type oxyde ou silicate modifié par un silane selon la revendication 3,
**caractérisé en ce qu'**
on utilise comme silane un composé d'organo-silicium de formule générale (II)
X¹X²X³Si-A-SiR¹R²R³ (II)
dans laquelle
X¹, X², X³ et A ont indépendamment l'un de l'autre la même signification que dans la formule (I),
R¹, R², R³ sont chacun indépendants l'un de l'autre et représentent un alkyle en C₁ à C₁₆, un alcoxy en C₁ à C₁₆, un haloalkyle en C₁ à C₁₆, un aryle, un aralkyle en C₇ à C₁₆, H, un halogène, ou X¹X²X³SiA-S-.

20. Procédé de production d'une charge biopolymère biooligomère de type oxyde ou silicate modifié par un silane selon la revendication 3,
**caractérisé en ce qu'**
on utilise comme silane un composé d'organo-silicium de formule générale (III)
X¹X²X³Si-Alc (III)
dans laquelle
X¹, X², X³ ont chacun indépendamment l'un de l'autre la même signification que dans la formule (I), et
Alc représente un alkyle en C₁ à C₁₈ à chaîne droite, ramifiée ou cyclique, un alcoxy en C₁ à C₅, un halogène, un hydroxy, un nitrile, un thiol, un haloalkyle en C₁ à C₄, -NO₂, un thioalkyle en C₁ à C₈, -NH₂, -NHR¹, -NR¹R², un alcényle, un allyle, un vinyle, un aryle ou un aralkyle en C₇ à C₁₆.

21. Procédé de production d'une charge biopolymère biooligomère de type oxyde de silicate modifié par un silane selon la revendication 20,
**caractérisé en ce que**
le silane de formule (III) correspond à (MeO)₃-Si-(CH₂)₃-H, (EtO)₃-Si-(CH₂)₃-H, (MeO)₃-Si-C(CH₃)₃, (EtO)₃-Si-C(CH₃)₃, (MeO)₃-Si-(CH₂)₆-H, (EtO)-Si-(CH₂)₈-H, (MeO)₃-Si-(CH₂)₁₆-H, (EtO)₃-Si(CH₂)₁₆-H, Me₃Si-OMe, Me₃Si-OEt, Me₃Si-Cl, Et₃Si-Cl, (MeO)₃Si-CH=CH₂, (EtO)₃Si-CH=CH₂, (Me₃Si)₂N-C(O)-H ou (Me₃Si)₂N-H.

22. Procédé de production d'une charge biopolymère biooligomère de type oxyde ou silicate modifié par un silane selon la revendication 20,
**caractérisé en ce qu'**on utilise comme silane un composé d'organo-silicium de formule générale (IV) ou (V)
[[(ROC(=O))ₚ-(G)ⱼ]ₖ-Y-S]ᵣ-G-(SiX¹X²X³)ₛ (IV)
[(X¹X²X³Si)_{q}-G]ₐ-[Y-[S-G-SiX¹X²X³]_{b}]_{c} (V)
dans laquelle
Y représente un espèce polyvalente (Q)_{z}D(=E), où l'on a ce qui suit p vaut de 0 à 5, r vaut de 1 à 3, z vaut de 0 à 2, q vaut de 0 à 6, a vaut de 0 à 7, b vaut de 1 à 3, j vaut de 0 à 1, mais peut également, lorsque p = 1, souvent valoir 0, c vaut de 1 à 6, de préférence de 1 à 4, t vaut de 0 à 5, s vaut de 1 à 3, k vaut de 1 à 2, sous la condition que
(1) si (D) est un atome de carbone, un soufre ou un sulfonyle, a + b = 2 et k = 1,
(2) si (D) est un atome de phosphore, a + b = 3, pour autant que c ≥ 1 et b = 1, avec a = c + 1,
(3) si (D) est un atome de phosphore, k = 2, Y représente une espèce polyvalente (Q)_{z}D(=E), de préférence :
-C(=NR)-, -SC(=NR)-, -SC(=O)-, (-NR)C(=O)-, (-NR)C(=S)-, -OC(=O)-, -OC(=S)-, -C(=O)-, -SC(=S)-, -C(=S)-, -5(=O)-, -S(=O)₂-, -OS(=O)₂-, (-NR)S(=O)₂-, -SS(=O)-, -OS(=O)-, (NR)S(=O)-, -SS(=O)₂-, (-S)₂P(=O)-, -(-S)P(=O)-, -P(=O)(-)₂, (S)₂P(=S)-, -(-S)P(=S)-, -P(=S)(-)₂, (-NR)₂P(=O)-, (-NR)(-S)P(=O)-, (-O)(-NR)P(=O)-, (-O)(-S)P(=O)-, (-O)₂P(=O)-, -(-O)P(=O)-, -(-NR)P(=O)-, (-NR)₂P(=S)-, (-NR)(-S)P(=S)-, (-O)(-NR)P(=S)-, (-O)(-S)P(=S)-, (-O)₂P(=S)-, -(-O)P(=S)-, ou -(NR)P(=S)-,
dans chacun de ces groupes, l'atome (D) est doublement lié à l'hétéroatome (E), qui à son tour est lié à l'atome de soufre (S), lequel est relié au moyen d'un groupe (G) avec l'atome de silicium (Si),
les R¹ représentent indépendamment l'un de l'autre H, une chaîne alkyle, droite, cyclique ou ramifiée, le cas échéant les chaines alkyle présentent des parties insaturées comme des doubles liaisons (alcènes), des triples liaisons (alcynes) ou encore contiennent des alkylaromates (aralkyle) ou des aromates, et ont les mêmes significations que dans la formule (II).
G représente indépendamment d'un autre substituant un hydrogène, une chaîne alkyle droite, cyclique ou ramifiée, en C₁ à C₁₈, le cas échéant les chaines akyle peuvent présenter une partie insaturée, comme des doubles liaisons (alcène), des triples liaisons (alcyne) ou encore contenir des alkylaromates (aralkyles) ou des aromates,
lorsque p vaut 0 dans la formule (IV), G est de préférence un hydrogène (H).
G ne correspond pas à la structure un fragment α,β-insaturé qui est lié avec le fragment Y de manière qu'apparaisse un fragment thiocarbonyle α,β insaturé,
X¹, X² et X³ ont chacun indépendamment l'un de l'autre la signification indiquée dans la formule (I).

23. Procédé de production d'une charge biopolymère biooligomère de type oxyde ou silicate modifié par un silane selon la revendication 3,
**caractérisé en ce qu'**on utilise comme silane un composé d'organo-silicium de formule générale (VI)
X¹X²X³Si-A-Sub (VI)
dans laquelle X¹, X², X³ et A, toujours indépendants l'un de l'autre, ont une signification donnée selon la formule (I) et Sub représente -SH, -Cl, -Br, -I, -NH₂, -NH(A-SiX¹X²X³), -N(A-SiX¹X²X³)₂, -NH-CH₂-CH₂-NH₂, NH-CH₂-CH₂-NH-CH₂-CH₂-NH₂, NHEt, NEt₂, NH(C₄H₉), O-C-(O)-CMe=CH₂, O-CH₂-(CH-O-CH₂) ou -SCN.

24. Procédé de production d'une charge biopolymère blooligomère de type oxyde ou silicate modifié par un silane selon la revendication 23,
**caractérisé en ce que**
le silane de formule (VI) correspond à
(MeO)₃Si-(CH₂)₃-SH, (EtO)₃Si-(CH₂)₃-SH, (C₃H₇O)₃Si-(CH₂)₃-SH, (MeO)₃Si-(CH₂)₃-Cl, (EtO)₃Si-(CH₂)₃-Cl, (C₃H₇O)₃Si-(CH₂)₃-Cl, [(MeO)₃Si-(CH₂)₃-]₂NH, [(EtO)₃Si-(CH₂)₃-]₂NH, [(C₃H₇O)₃Si-(CH₂)₃-]₂NH, (MeO)₃Si-(CH₂)₃-NH₂, (EtO)₃Si-(CH₂)₃-NH₂, (C₃H₇O)₃Si-(CH₂)₃-NH₂, (MeO)₃Si-(CH₂)₃-NH-(CH₂)₂-NH₂, (EtO)₃Si-(CH₂)₃-NH-(CH₂)₃-NH₂, (C₃H₇O)₃Si-(CH₂)₃-NH-(CH₂)₂-NH₂, (MeO)₃Si-(CH₂)₃-O-C(O)-CMe=CH₂, (EtO)₃Si-(CH₂)₃-O-C(O)-CMe=CH₂, (C₃H₇O)₃Si-(CH₂)₃-O-C(O)-CMe=CH₂, (MeO)₃Si-(CH₂)₃-O-CH₂(CH-O-CH₂), (EtO)₃Si-(CH₂)₃-O-CH₂-(CH-O-CH₂), (C₃H₇O)₃-O-CH₂-(CH-O-CH₂), (MeO)₃Si-(CH₂)₃-SCN, (EtO)₃Si-(CH₂)₃-SCN ou (C₃H₇O)₃Si-(CH₂)₃-SCN.

25. Procédé de production d'une charge biopolymère biooligomère de type oxyde ou silicate modifié par un silane selon la revendication 3.
**caractérisé en ce qu'**
on utilise des oligomères ou cooligomères des silanes de formules (I)-(VI).

26. Procédé de production d'une charge biopolymère biooligomère de type oxyde ou silicate modifié par un silane selon la revendication 3.
**caractérisé en ce que**
la charge biopolymère biooligomère de type oxyde ou silicate est une charge naturelle et/ou synthétique.

27. Procédé de production d'une charge biopolymère biooligomère de type oxyde ou silicate modifié par un silane selon la revendication 3,
**caractérisé en ce qu'**
on utilise comme charge biopolymère biooligomère de type oxyde ou silicate un ou plusieurs corps du groupe du kaolin, du kieselguhr, du mica, des terres de diatomées, de l'argile, du talc, de la wollastonite, des silicates ou d'autres corps sous forme de fibres de verre ou de tissus de verre, des zéolithes, de l'oxyde d'aluminium, de l'hydroxyde ou trihydrate d'aluminium, des silicates d'aluminium, des silicates, des acides siliciques précipités ou pyrogènes avec des surfaces BET (mesurées avec de l'azote gazeux) de 1 à 1000 m²/g, de l'oxyde de zinc, de l'oxyde de bore, de l'oxyde de magnésium, de l'amidon naturel ou modifié, de la cellulose, de l'amylose, de l'amylopectine, de l'acétate de cellulose, du maltose, du cellobiose, du lactose, du saccharose, du raffinose, du glycogène, des corps pectinés, de la chitine, des protéines naturelles ou modifiées ou des oxydes de métaux de transition.

28. Procédé de production d'une charge biopolymère, biooligomère de type oxyde ou silicate modifié par un silane selon la revendication 3,
**caractérisé en ce que**
comme gaz comprimé on utilise du dioxyde de carbone, de l'hélium, de l'azote, du protoxyde d'azote, de l'hexafluorure de soufre, des alcanes gazeux comportant de 1 à 5 atomes de carbone, des alcènes gazeux comportant de 2 à 4 atomes de carbone, des alcynes gazeux, des diènes gazeux, des hydrocarbures fluorés gazeux, des hydrocarbures chloro- et/ou fluoro-chlorés ou leurs substituts, ou l'ammoniac, ainsi que des mélanges de ces corps.

29. Procédé de production d'une charge biopolymère biooligomère de type oxyde ou silicate modifié par un silane selon la revendication 28,
**caractérisé en ce que**
comme gaz comprimé on utilise le dioxyde de carbone.

30. Mélange de caoutchoucs,
**caractérisés en ce qu'**
ils contiennent du caoutchouc, la charge biopolymère biooligomère de type oxyde ou silicate modifié par un silane selon l'invention de la revendication 1, le cas échéant de l'acide silicique précipité et/ou du noir de fumée et/ou d'autres adjuvants de caoutchouc.

31. Utilisation des mélanges de caoutchoucs selon la revendication 30, pour la production d'articles moulés.

32. Utilisation des mélanges de caoutchouc selon la revendication 31, pour la production de pneumatiques pour véhicules de tourisme et Industriels, surfaces de roulement pour véhicules de tourisme et industriels, constituants de pneumatiques pour véhicules de tourisme et industriels, enveloppes de câbles, tubes, courroies sans fin, ruban de transport, revêtements de cylindres, pneus de bicyclettes et de motocyclettes et leurs constituants, semelles de chaussures, bagues d'étanchéité, profilés et éléments isolants.
